# EUROPEAN PATENT SPECIFICATION

(11) **EP 3 200 484 B1**
(45) Date of publication and mention of the grant of the patent: **22.04.2020**
(21) Application number: 15843224.5
(22) Date of filing: 20.03.2015
(51) Int. Cl.: H04W 4/06, H04L 12/18, H04W 28/02, H04L 29/06, G06F 21/55, H04W 4/00

(54) **METHOD AND SYSTEM FOR TREATMENT OF NETWORK OVERLOAD OR CONGESTION**
VERFAHREN UND SYSTEM ZUR BEHANDLUNG VON NETZÜBERLASTUNG
PROCÉDÉ ET SYSTÈME DE TRAITEMENT DE SURCHARGE ET DE CONGESTION DE RÉSEAU

(30) Priority: 24.09.2014 CN 201410495828
(43) Date of publication of application: 02.08.2017
(73) Proprietor: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); LU, Chen, Shenzhen Guangdong 518057 (CN); LIU, Hongjun, Shenzhen Guangdong 518057 (CN); LV, Yong, Shenzhen Guangdong 518057 (CN); WANG, Yaying, Shenzhen Guangdong 518057 (CN)
(74) Representative: Mozzi, Matteo
(86) International application number: PCT/CN2015/074801
(87) International publication number: WO 2016/045325

(56) References cited:
- WO-A1-2016/003252
- CN-A- 101 166 104
- CN-A- 101 299 831
- CN-A- 101 479 997
- CN-A- 104 270 725
- VODAFONE ET AL: "Potential Solutions for Group Call eMBMS Congestion Management", 3GPP DRAFT; R3-141974, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Dresden, Germany; 20140818 - 20140822 22 August 2014 (2014-08-22), XP050822127, Retrieved from the Internet: URL:http://www.3gpp.org/ftp/tsg_ran/WG3_Iu /TSGR3_85/Docs/ [retrieved on 2014-08-22]
- HUAWEI ET AL: "Notification of MBMS conditions", 3GPP DRAFT; S2-142496_ NOTIFICATION OF MBMS CONDITIONS_V1.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dublin, Ireland; 20140707 - 20140711 2 July 2014 (2014-07-02), XP050836929, Retrieved from the Internet: URL:http://www.3gpp.org/ftp/tsg_sa/WG2_Arc h/TSGS2_104_Dublin/Docs/ [retrieved on 2014-07-02]
- ZTE: "The issues on reporting RAN congestion information", 3GPP DRAFT; R3-141793 THE ISSUES ON REPORTING RAN CONGESTION INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG3, no. Dresden, Germany; 20140818 - 20140822 8 August 2014 (2014-08-08), XP050821767, Retrieved from the Internet: URL:http://www.3gpp.org/ftp/tsg_ran/WG3_Iu /TSGR3_85/Docs/ [retrieved on 2014-08-08]
- VODAFONE: "Group Call eMBMS Congestion Management", 3GPP DRAFT; R3-141876, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Dresden, Germany; 20140818 - 20140822 17 August 2014 (2014-08-17), XP050796262, Retrieved from the Internet: URL:http://www.3gpp.org/ftp/Meetings_3GPP_ SYNC/RAN3/Docs/ [retrieved on 2014-08-17]

## Description

### Technical Field

The disclosure relates to the field of communications, and in particular to a method and device for determining and processing indication information, a method and device for processing a request message and a computer storage medium.

### Background

A trunking communication system is a dedicated wireless communication system developed to meet a commanding and scheduling requirement of a user in the industry and oriented to a specific industrial application, a large number of wireless users share a small number of wireless channels in the system, and the system takes commanding and scheduling as a main body application, and is a multipurpose and high-performance wireless communication system. The trunking communication system has a broad application market in fields of government departments, public security, emergency communication, power, civil aviation, petrochemical industry, military and the like.

The trunking communication system experiences a development history similar to a cellular mobile communication system. A first-generation trunking system is an analogue trunking communication system, and mainly supports voice communication. The analogue trunking communication system earliest introduced in China is an Actionet system of a Nokia corporation, and the Actionet system adopts MPT-1327 signalling applied to a 450MHz frequency band. Then, F.A.S.T of Japan and Smartnet of Motorola of the United States are introduced in China, and occupy a market share of more than 80 percent of a trunking market in China.

A second-generation trunking system is a narrowband digital trunking communication system, rising in the 1990s, was started to be deployed in China in about 2004, and is a trunking communication system most widely applied in China at present. A digital trunking communication system supports voice and low-speed data (at most 28.8kbps) communication, and representative systems include a Terrestrial Trunked Radio (TETRA) system defined by an European Telecommunications Standards Institute (ETSI), an Integrated Digital Enhanced Networks (iDEN) system of the Motorola of the United States, a Global Open Trunking Architecture (GoTa) system developed by a ZTE Corporation on a basis of Code Division Multiple Access IX (CDMA1X), and a GT800 system developed by a Huawei Technologies Co., Ltd. on a basis of Global System for Mobile Communications (GSM). In recent two to three years in China, TETRA networks grow most fast, and a number of the TETRA networks is about 2or3 of digital trunking communication networks constructed in the whole country.

A characteristic differentiating a trunking system from a public system is that the trunking system is required to have an efficient commanding and scheduling characteristic and a network is required to have high reliability and security.

Call control: a service bearer is established, maintained and released between a calling user and a called user according to a service request of a user.

Authentication and certification: the authentication and the certification are supported, and an authentication function may include authentication of a network side to a terminal and two-way authentication of the network side to the terminal and the terminal to the network side.

Fail soft: when a link between the network side and an Evolved Node B (eNB) or between network elements in the network side fails, the eNB may provide limited trunking service for user terminals within coverage of the eNB.

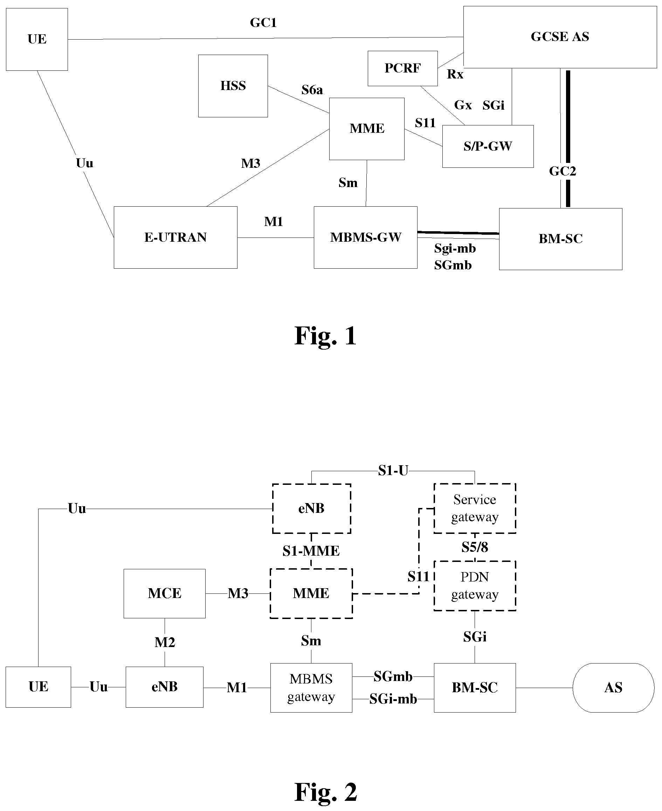

Network interconnection and intercommunication function: intercommunication with a Public Switched Telephone Network (PSTN), a public mobile communication system (such as a GSMorCDMA and Time Division-Long Term Evolution (TD-LTE), an Internet Protocol (IP) telephone, a trunking communication system of another system and the like may be implemented. In 3rd Generation Partnership Project (3GPP) LTE, trunking communication is called as a Group Communication Service Enabler (GCSE). Fig. 1 is a system structural schematic diagram of a trunking communication system according to the related art.

For effectively utilizing mobile network resources, the 3GPP proposes a Multimedia Broadcast Multicast Service (MBMS), and the service is a technology for transmitting data from a data source to multiple target mobile terminals, implements sharing of network (including a core network and an access network) resources and increases a utilization rate of the network resources (particularly air interface resources). The MBMS defined by the 3GPP may not only implement pure-text low-rate message multicast and broadcast but also implement high-speed multimedia service broadcast and multicast and provide various video, audio and multimedia services, which undoubtedly follows a development trend of mobile data in the future and provides broader service prospect for development of 3rdor4th-Generation (3or4G).

An MBMS has characteristics of large service data volume, long receiving duration of a mobile terminal and constant average data rate. The characteristics determine that scheduling and control signalling configuration of the MBMS are semi-static, that is, scheduling information and control signalling information of the MBMS are kept unchanged "for a long time", and these information is periodically sent through an MBMS Control Channel (MCCH), and is collectively referred to as MCCH information. Multiple MCCHs may exist in an Evolved MBMS (eMBMS) system, the multiple MCCHs correspond to different MBMS over a Single Frequency Network (MBSFN) areas, and only control information of MBMSs sent by the corresponding MBSFN areas are born therein. Fig. 2 is a structural schematic diagram of an MBMS in LTE according to the related art.

At present, the industry is discussing a probability of adopting an MBMS technology for trunking communication.

In a researching and practicing process of the related art, it is found that the related art has the following problems: in case of congestion or overload of user plane data of an MBMS air interface which sends a trunking service, a Group Communication Service (GCS) Application Server (AS) is required to establish a unicast bearer for an influenced User Equipment (UE) and simultaneously stop multicast bearer sending of an influenced service. The GCS AS does not know about an MBSFN area where the influenced UE is located, and only knows about an MBMS area where the UE is located. Under a normal condition, an MBMS area is larger than an MBSFN area, and when multicast sending of trunking data is stopped according to the MBMS area, an UE in another area without congestion or overload may be influenced. For how to implement mapping from the MBMS area to the MBSFN area and how to reduce influence on the UE in an area without congestion or overload, there is yet no effective solution at present.

Document VODAFONE ET AL: "Potential Solutions for Group Call EMBMS Congestion Management", 3GPP DRAFT, R3-141974, discloses scenarios for the Work Item "Group Call eMBMS Congestion Management".

### Summary

The present invention is defined by the appended independent claims. Dependent claims constitute embodiments of the invention. The embodiments of the following description which are not covered by the appended claims are considered as not being part of the present invention.

Embodiments of the disclosure provide a method and device for determining and processing indication information, a method and device for processing a request message and a computer storage medium, so as to at least solve problems of how to implement mapping from an MBMS area to an MBSFN area and how to reduce influence on an UE in an area without congestion or overload in the related art.

According to the embodiments of the disclosure, it is determined that the user plane data born on the MBMS is congested or overloaded to configure the first indication information; and the first indication information is sent to the GCS AS, in which the first indication information is used for providing the reference basis in the process that the GCS AS requests the MCE or the eNB to stop the trunking service which is borne on the MBMS bearer and influenced by the congestion or overload of the user plane data, so that the problems of how to implement mapping from an MBMS area to an MBSFN area and how to reduce influence on the UE in the area without congestion or overload in the related art are solved, an MBMS multicast bearer of the MBSFN area in the MBMS area may further be modified, and in case of congestion or overload of the MBMS bearer, the trunking service is stopped to be borne on the MBMS in the MBSFN area to alleviate the congestion or overload of an MBMS bearer and reduce influence on the UE in the area without congestion or overload.

### Brief Description of the Drawings

The drawings described here are adopted to provide a further understanding to the disclosure, and form a part of the disclosure. Schematic embodiments of the disclosure and descriptions thereof are adopted to explain the disclosure and not intended to form improper limits to the disclosure. In the drawings:
Fig. 1 is a system structural schematic diagram of a trunking communication system according to the related art;
Fig. 2 is a structural diagram of an MBMS in LTE according to the related art;
Fig. 3 is a flowchart of a method for determining indication information according to an embodiment of the disclosure;
Fig. 4 is a schematic diagram of a process of sending congestion or overload indication information to an AS by an eNB according to an example embodiment of the disclosure;
Fig. 5 is a flowchart of a method for processing a request message according to an embodiment of the disclosure;
Fig. 6 is a flowchart of a method for processing indication information according to an embodiment of the disclosure;
Fig. 7 is a flowchart of a method for implementing modification of a multicast bearer in a scenario where an eNB detects starting of congestion or overload of the multicast bearer according to an example embodiment of the disclosure;
Fig. 8 is a flowchart of a method for implementing modification of a multicast bearer in a scenario where an eNB detects ending of congestion or overload of the multicast bearer according to an example embodiment of the disclosure;
Fig. 9 is a flowchart of a method for implementing modification of a multicast bearer in a scenario where an eNB periodically reports congestion or overload according to an example embodiment of the disclosure;
Fig. 10 is a structural block diagram of a device for determining indication information according to an embodiment of the disclosure;
Fig. 11 is a structural block diagram of a device for determining indication information according to an example embodiment of the disclosure;
Fig. 12 is a structural block diagram of a device for processing a request message according to an embodiment of the disclosure;
Fig. 13 is a structural block diagram of a device for processing a request message according to an example embodiment of the disclosure;
Fig. 14 is a structural block diagram of a device for processing indication information according to an embodiment of the disclosure;
Fig. 15 is a structural block diagram of a device for processing indication information according to an example embodiment of the disclosure; and
Fig. 16 is a schematic diagram of a multicast bearer modification system according to an example embodiment of the disclosure.

### Detailed Description

The disclosure will be described below with reference to the drawings and embodiments in detail. It is important to note that the embodiments in the disclosure and characteristics in the embodiments may be combined under the condition of no conflicts.

In the embodiments provided below, if there is no specific description, an MBMS of the disclosure refers to an evolved MBMS, i.e. an eMBMS, an AS refers to a GCS AS, and group communication refers to trunking communication. At present, trunking services are deployed on a GCS AS, and of course, other services may also be deployed on the GCS AS. In the disclosure, for more convenience in description, a service distributed by the GCS AS is called as a trunking service for short.

In an example embodiment, configuration of an MCE refers to configuration of a centralized MCE in a network, and at this moment, an MCE and a plurality of eNBs exist in an MBSFN area, and the MCE may communicate with the eNBs through an M2 interface. Distributed MCE refers to that MCEs and eNBs are arranged together in an MBSFN area, and may also be understood that functions and effects of the MCEs may be realized by specific components in the eNBs, and at this moment, a number of the eNBs and a number of the MCEs are equal in the MBSFN area. In the disclosure, for facilitating description, for distributed MCE, a Mobility Management Entity (MME) may communicate with MCE components in the eNBs through an M3 interface, and at this moment, the M2 interface still exists as a logical interface. For a distributed MCE architecture, coordination work between the MCEs is implemented through Operation Administration and Maintenance (OAM). If there are no specific descriptions, the disclosure may be applied to a centralized or distributed MCE architecture. In the disclosure, if the distributed MCE architecture is adopted, communication between the MCEs and the eNBs may be implemented through the M2 interface, and actually belongs to internal communication between the eNBs and their MCE components.

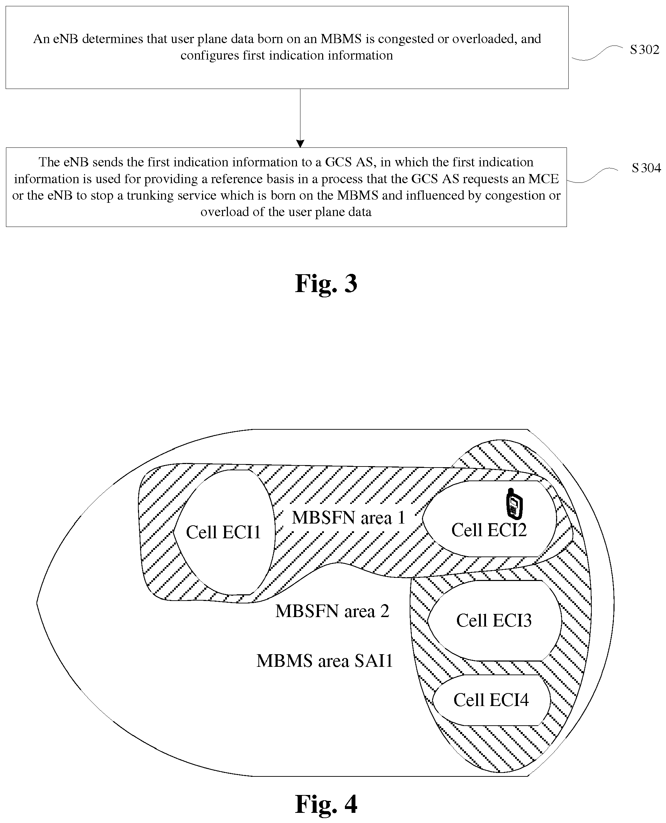

Fig. 3 is a flowchart of a method for determining indication information according to an embodiment of the disclosure. As shown in Fig. 3, the method may include the following processing steps.

Step S302: an eNB determines that user plane data borne on an MBMS is congested or overloaded, and configures first indication information.

Step S304: the eNB sends the first indication information to a GCS AS, in which the first indication information is used for providing a reference basis in a process that the GCS AS requests an MCE or the eNB to stop a trunking service which is borne on the MBMS and influenced by congestion or overload of the user plane data.

In the related art, mapping from an MBMS area to an MBSFN area may not be implemented, and influence on an UE in an area without congestion or overload may not be reduced. By adopting the method shown in Fig. 3, the eNB may sent the indication information used for indicating that the user plane data is congested or overloaded when determining that the user plane data is congested or overloaded, and the GCS AS requests the MCE (for centralized MCE) or the eNB (for distributed MCE) to stop the trunking service which is borne on the MBMS and influenced by the congestion or overload of the user plane data, so that the problems of how to implement mapping from the MBMS area to the MBSFN area and how to reduce the influence on the UE in the area without congestion or overload in the related art are solved, an MBMS multicast bearer of the MBSFN area in the MBMS area may further be modified, and in case of congestion or overload of the MBMS bearer, the trunking service is stopped to be borne on the MBMS in the MBSFN area to alleviate the congestion or overload of the MBMS bearer and reduce influence on the UE in the area without congestion or overload.

In an example implementation process, the step that the eNB determines that the user plane data of the MBMS bearer is congested or overloaded may include the following processing: when at least one eNB detects that the user plane data is congested or overloaded, determining that an MBMS over a Single Frequency Network (MBSFN) area or MBMS area where the at least one eNB is located is congested or overloaded. That is, whether or not the user plane data is congested or overloaded is detected through the at least one eNB, in which congestion or overload of the at least one eNB indicates that the MBSFN area where the at least one eNB is located is congested or overloaded.

Congestion refers to that a user plane data load reaches a preset threshold value, and overload refers to that it is impossible for a network node to continue processing an additional user plane data load. The user plane data mentioned in the disclosure refers to MBMS data on a Physical Multicast Channel (PMCH).

In an example implementation process, the eNB may detect that the user plane data is congested or overloaded according to a determination condition, in which the determination condition may be preconfigured (without limiting a message type) by OAM or contained in a request message received from the GCS AS.

The eNB may judge whether or not the MBMS user plane data is congested or overloaded according to a preset rule, that is, the congestion or overload determination condition is predefined, and when the eNB makes a judgment to determine that the predefined congestion or overload determination condition may be met, it may be determined that congestion or overload has occurred.

The congestion or overload determination condition, i.e. the preset rule, may be preset, and may also be contained in the request message sent to the eNB.

The eNB may send the congestion or overload indication information to the GCS AS through eNB→MCE→MME→MBMS GateWay (GW)→BM-SC→AS. That is, the eNB sends the indication information to the MCE through an M2 interface at first, and the indication information may be implemented by adopting existing M2 interface signalling and adding a new indication field, or, directly adopts new M2 interface signalling.

Similarly, when being sent on an M3 interface, an Sm interface, an SGmb interface and an MB2-c interface, the congestion or overload indication information may be implemented by adopting existing interface signalling and adding a new indication field, or, directly adopting new dedicated interface signalling.

In an example embodiment, a content contained in the first indication information may include, but not limited to, at least one of:
(1) a congestion or overload ID;
(2) at least one cell ID, for example: ECI and ECGI;
(3) at least one SAI;
(4) at least one MBSFN area ID;
(5) at least one MBMS ID, for example: TMGI; and
(6) a congestion or overload starting ID,
in which the congestion or overload ID is used for indicating whether a load of the user plane data in a current network is congested or overloaded, the at least one cell ID is used for indicating cells influenced by the congestion or the overload, the at least one SAI is used for indicating MBMS areas influenced by the congestion or the overload, the at least one MBSFN area ID is used for indicating congested or overloaded MBSFN areas, and the at least one MBMS ID is used for indicating trunking services influenced by the congestion or the overload.

It is important to point out that the MBSFN area IDs are sent on the M2 interface.

In an example implementation process, the content of the first indication information is determined by a manner for triggering congestion detection.
1) When the AS requests for triggering and a request message contains an area ID and a service ID, the first indication information is required to include: a congestion or overload ID and a starting or ending ID, and furthermore, may also include: the area ID and the service ID.
2) When being periodically reported, the first indication information may include: a congestion or overload ID, an area ID, a service ID and a starting or ending ID, in which the area ID may include at least one of : a cell ID, an SAI and an MBSFN area ID. When the area ID reported to the MCE by the eNB is a cell ID, the MCE may judge a congested MBSFN area or service area according to the received cell ID and the service ID. The AS may transmit a service stopping message to the MCE according to the received indication information, including at least one of the received service area ID and the cell ID, and then the MCE disables a service of a corresponding MBSFN area according to the service area ID andoror cell ID received from the AS and information of the locally judged congested MBSFN area. Similar processing is performed on other area identification information, and will not be elaborated herein.

A content of congestion or overload starting or ending may include, but not limited to, at least one of:
(1) starting (indicated by 1 or true); and
(2) ending (indicated by 0 or false).

For congestion or overload starting or ending, in other words, congestion or overload starting is equivalent to that congestion or overload currently occurs, and congestion or overload ending is equivalent to that no congestion or overload currently occurs or the started congestion or overload has ended.

Node congestion refers to that an MBMS user plane data load in a network reaches a preset threshold value; and node overload refers to that it is impossible for the network node to process an additional MBMS user plane data load.

The content of the reported MBMS congestion or overload information may include, but not limited to: when congestion is indicated by C and overload is indicated by O, for example:
{ECI1 or MBSFN area ID1 or SAI1: TMGI1, TMGI2, TMGI3; C, true},
{ECI2 or MBSFN area ID1 or SAI1: TMGI5, TMGI6; O, false} and
{ECI3 or MBSFN area ID2 or SAI1: TMGI10; C, false}.

Notes: in the examples, TMGI1, TMGI2 and TMGI3 in ECI1 are congested; overload of TIMGI5 and TMGI6 in ECI2 ends; and congestion of TMGI10 in ECI3 ends.

The congestion or overload indication information may be modified in a sending process, the ECIs are usually modified into MBMS SAIs, and if the MCE modifies the ECIs in the received indication information into the SAIs, the GCS AS may determine the congested or overloaded MBMS areas according to the received indication information.

Under the condition that the overload indication O is 1 (True), the congestion indication C may not be sent; or although the congestion indication C is sent, the UE may ignore the indication.

In an example embodiment, the eNB sends the first indication information to the GCS AS in one of the following manners.

A first manner: at least one congested or overloaded MBMS ID is sent to the MCE to cause the MCE to select at least one MBMS ID to be reported from the at least one congested or overloaded MBMS ID according to a corresponding relationship between a first parameter and a second parameter and report the at least one selected MBMS ID to the GCS AS, wherein the first parameter is a QCI or an ARP, and the second parameter is a TMGI.

A second manner: TMGI state information in an SAI specified in a request message is reported according to the request message received from the GCS AS.

Considering that it may only be a specific trunking service (for example: Push To Talk (PTT)) congested or overloaded, it is determined that the congested or overloaded service is the QCI or the ARP. Since the eNB does not know about the QoS information of the service, there are the following two congestion or overload reporting methods for the eNB.

A first method: the eNB reports all congested or overloaded service identifiers TMGIs to the MCE, and the MCE selects and reports a TMGI of the congested or overloaded specific service to the GCS AS according to the TMGI of the specific service (the MCE according to a corresponding relationship between a QCI or ARP and a TMGI).

Alternatively, the eNB may detect the congestion or overload and report the influenced trunking service to the AS in at least one of the following manners:
a first manner: all trunking services borne on the eNB, that is: all MBSFN areas are included;
a second manner: congested or overloaded MBSFN areas are detected, and all trunking services configured on this or these MBSFN areas, that is, the trunking services borne on all PMCHs of the MBSFN areas are included; and
a third manner: at least one PMCHs are borne on each MBSFN area, and the eNB detects that at least one PMCH is congested or overloaded, and then the eNB reports all the trunking services configured on the at least one PMCH.

A second method: the AS requests an SAI and TMGI of which states are required to be reported, and sends a request message to the eNB through a path AS→BM-SC→MBMS GW→MME→MCE→eNB, and the eNB may report the state of the TMGI in the specific SAI to the AS through eNB→MCE→MME→MBMS GW→BM-SC→AS. Alternatively, when the request message of the AS only includes SAI information, the eNB reports all TMGI states in the SAI.

In an example embodiment, before the eNB sends the first indication information to the GCS AS, the following operations may further be included:
Step S1: the eNB judges or not a triggering condition of whether it is necessary to send the first indication information to the GCS AS, including, but not limited to one of the followings:
a first condition: the first indication information is sent to the GCS AS under the condition that a congestion or overload starting event occurs or a congestion or overload ending event occurs;
a second condition: the first indication information is sent to the GCS AS after a request message is received from the GCS AS;
a third condition: the first indication information is sent to the GCS AS after a request message is received from the GCS AS and a congestion or overload starting event occurs or after a request message is received from the GCS AS and a congestion or overload ending event occurs;
a fourth condition: the first indication information is sent to the GCS AS according to a preset period; and
a fifth condition: the first indication information is sent to the GCS AS after every restart.

A sending triggering manner may be one of: event triggering, AS request triggering, event triggering and AS request triggering, and periodic reporting, in which event triggering reporting refers to that the network node reports state information of the node to the AS when the congestion or overload starting or ending event occurs to the network node; AS request triggering refers to that the AS sends the request message to the network node and the network node receiving the request message reports state information of the node to the AS; event triggering and AS request triggering refers to that the AS sends the request message to the network node and the network node reports the state information of the node to the AS when detecting a congestion or overload event; and periodic reporting refers to that a reporting period is configured and the eNB reports the state information of the node to the AS in each period, and the reporting period may be specified in advance or specified when the AS sends the request message.

The state that the congestion or overload starting or ending event occurs to the network node refers to: switching from a starting state to an ending state, or switching from the ending state to the starting state. That is, in case of switching from no congestion or overload (equivalent to that last congestion or overload has ended) to starting (equivalent to that congestion or overload has currently occurred), the eNB is required to report the state; in case of switching from occurrence of congestion or overload (equivalent to that the congestion or overload has currently started) to no congestion or overload (equivalent to that the congestion or overload has currently ended), the eNB is required to report the state; and moreover, under the condition that the eNB detects a mutual change of the congestion state and the overload state, eNB is also required to report the state.

Briefly, C=congestion indication, and is identified by adopting {0,1}; and O=overload indication, and is identified by adopting {0,1}. Once at least one of an identifier C and identifier O changes, the eNB is required to report the state.

In a word, when the congestion or overload starting or ending state does not change, the eNB is not required to report, and then the AS may accurately master the congestion or overload state of the MBMS. The eNB may be restarted after a failure, and when a congestion or overload change occurs to the eNB, the eNB may not know about the congestion or overload change, so that the eNB is always required to report congestion or overload indication information once after every restart.

Fig. 4 is a schematic diagram of a process of sending congestion or overload indication information to an AS by an eNB according to an example embodiment of the disclosure. As shown in Fig. 4, there are two MBSFN areas in an SAI1 of an MBMS service area: an MBSFN area 1 and an MBSFN area 2, in which the MBSFN area 1 includes two cells={ECI1, ECI2}, and the MBSFN area 2 includes three cells={ECI2, ECI3, ECI4}. It is supposed that the eNB reports congestion or overload indication information {ECI2 or MBSFN area ID1 or SAI1; TMGI2, TMGI3; C; true} to the AS, that is, TMGI2 and TMGI3 in ECI2 in the MBSFN area 1 in the SAI1 are congested. After receiving the congestion or overload indication information {ECI2 or MBSFN area ID1 or SAI1; TMGI2, TMGI3; C; true}, the AS determines that TMGI2 and TMGI3 in ECI2 in the SAI1 are congested.

In an example embodiment, after the operation that the first indication information is sent to the GCS AS in Step S304, the following steps may further be included:
Step S2: the eNB determines that the congestion or overload of the user plane data has been recovered, and configures second indication information; and
Step S3: the eNB sends the second indication information to the GCS AS, in which the second indication information is used for providing a reference basis for the GCS AS to select to continue sending the stopped trunking service in a manner of a unicast bearer or in a manner of the recovered MBMS bearer.

Congestion or overload ending refers to recovery of the network, for example: the user plane data load does not meet the preset congestion or overload condition.

The eNB may send congestion or overload ending (recovery) indication information to the GCS AS through eNB→MCE→MME→MBMS GW→BM-SC→AS.

The congestion or overload ending indication information may include, but not limited to, at least one of:
(1) a congestion or overload ID;
(2) at least one cell ID, for example: ECI and ECGI;
(3) at least one SAI;
(4) at least one MBSFN area ID;
(5) at least one MBMS ID, for example: TMGI, MBMS session ID (for example: session ID); and
(6) a congestion or overload starting ID.

A sending triggering manner may be one of: event triggering, AS request triggering, event triggering and AS request triggering, and periodic reporting, in which event triggering reporting refers to that the network node reports the state information of the node to the AS when the congestion or overload starting or ending event occurs to the network node; AS request triggering refers to that the AS sends the request message to the network node and the network node receiving the request message reports the state information of the node to the AS; event triggering and AS request triggering refers to that the AS sends the request message to the network node and the network node reports the state information of the node to the AS when detecting a congestion or overload event; and periodic reporting refers to that a reporting period is configured and the eNB reports the state information of the node to the AS in each period, and the reporting period may be specified in advance or specified when the AS sends the request message.

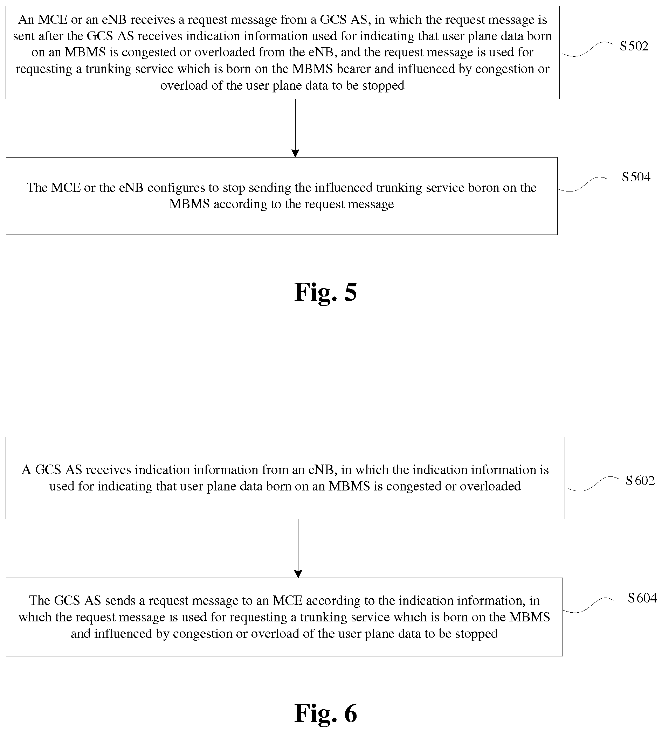

Fig. 5 is a flowchart of a method for processing a request message according to an embodiment of the disclosure. As shown in Fig. 5, the method may include the following processing steps.

Step S502: an MCE or an eNB receives a request message from a GCS AS, in which the request message is sent after the GCS AS receives indication information used for indicating that user plane data borne on an MBMS is congested or overloaded from the eNB, and the request message is used for requesting a trunking service which is borne on the MBMS bearer and influenced by congestion or overload of the user plane data to be stopped.

Step S504: the MCE or the eNB configures to stop sending the influenced trunking service boron on the MBMS according to the request message.

In an example embodiment, the MCE or the eNB may judge an MBSFN area and MBMS of a multicast bearer to be stopped through the received request message and a local database, for example, according to an MBSFN area identifier and TMGI in congestion or overload indication information sent by the eNB on an M2 interface.

As shown in Fig. 4, it is supposed that the MCE receives a request message from an MME, including {ECI2 or SAI1; TMGI2, TMGI3}, ECI2 belongs to two MBSFN areas and the MCE has known about that an MBSFN area 1 is congested, the MCE determines to stop multicast sending of the TMGI2 and TMGI3 of the MBSFN area 1. The MCE continues sending MBMS scheduling information to the eNB in the MBSFN area 1, and TMGI2 and TMGI3 are deleted from the message. The eNB receiving the MBMS scheduling information sends updated MCCH information in the MBSFN area 1, and deletes TMGI2 and TMGI3 from the updated MCCH information, and influenced UE in the MBSFN area 1 receives the updated MCCH information and determines that a corresponding MBMS has been deleted, that is, sending of TMGI2 or TMGI3 of the corresponding trunking service on a multicast bearer is stopped.

Fig. 6 is a flowchart of a method for processing indication information according to an embodiment of the disclosure. As shown in Fig. 6, the method may include the following processing steps.

Step S602: a GCS AS receives indication information from an eNB, in which the indication information is used for indicating that user plane data borne on an MBMS is congested or overloaded.

Step S604: the GCS AS sends a request message to an MCE according to the indication information, in which the request message is used for requesting a trunking service which is borne on the MBMS and influenced by congestion or overload of the user plane data to be stopped.

In an example embodiment, the AS may request the MCE to stop the MBMS bearer of the influenced service via a BM-SC.

Before the AS sends the request message, the AS determines at least one of influenced target UE and trunking service TMGI according to the congestion or overload indication information, and then the AS determines an action to be adopted according to the congestion or overload indication information and a local strategy, and in case of congestion, establishes a unicast bearer for the target UE, and sends the trunking service through the unicast bearer; and in case of overload, the AS puts the trunking service in a queue and sends the trunking service after the overload ends, or, the AS seizes a resource of an existing trunking service by virtue of a high-priority trunking service.

The AS sends the request message to an MME through a path BM-SC→MBMS GW→MME, the request message is used for stopping a multicast bearer, and information contained in the request message may include at least one of: a cell ID and MBMS ID, in which at least one of the cell ID and the MBMS ID is the cell ID ECI and service ID TMGI in the congestion or overload indication information received by the AS.

The MBMS GW sends the request message to all MMEs in an area, and each MME judges whether or not at least one cell belongs to the MME according to the cell ID in the request message, and when the at least one cell does not belong to the MME, the MME discards the received request message. The MME selects an MCE according to the cell ID and sends the request message. The MME may acquire the MCE to which the cell belongs through an M3 interface message.

The request message may be implemented by an existing flow or a new flow, in which the existing flow is that: a cell ID field is added into an MBMS session stop request or MBMS session update in the existing flow. The request message is sent to the MME through the path MME through a path BM-SC→MBMS GW→MME, and the request message is used for stopping the MBMS bearer.

When the MBMS GW may not determine the specific MME, the MBMS GW may send the request message to all the MMEs in the area. Considering that the request message contains an ID of the target cell, each MME may judge whether or not the target cell belongs to a range of the MME, and send response messages to the MBMS GW.

The MME sends the response messages to the AS, which indicates that the MME has succeeded or failed to receive the request message. When the response messages indicate failures, the AS or BM-SC or MBMS GW may resend the request message.

In addition, the AS may select a manner for sending the trunking service to the UE. The AS determines the influenced target UE through the recovery indication information, and selects a proper manner to send the trunking service to the target UE. For example: the trunking service is continued to be borne on the unicast bearer or the recovered MBMS bearer. In order to avoid service interruption, the GCS AS may establish a Point To Point (PTP) bearer for the influenced UE and then release a Point To Multipoint (PTM) bearer of the trunking service.

The example implementation processes will be further described below with the following example embodiments of some specific trunking flows. In the following example embodiments, descriptions are made only for a scenario where a centralized MCE is configured. However, in a practical scenario, a distributed MCE may also be configured, and at this moment, the MCE is arranged in an eNB, and is equivalent to a specific component, which realizes a function of the MCE, in the eNB.

### Example embodiment 1

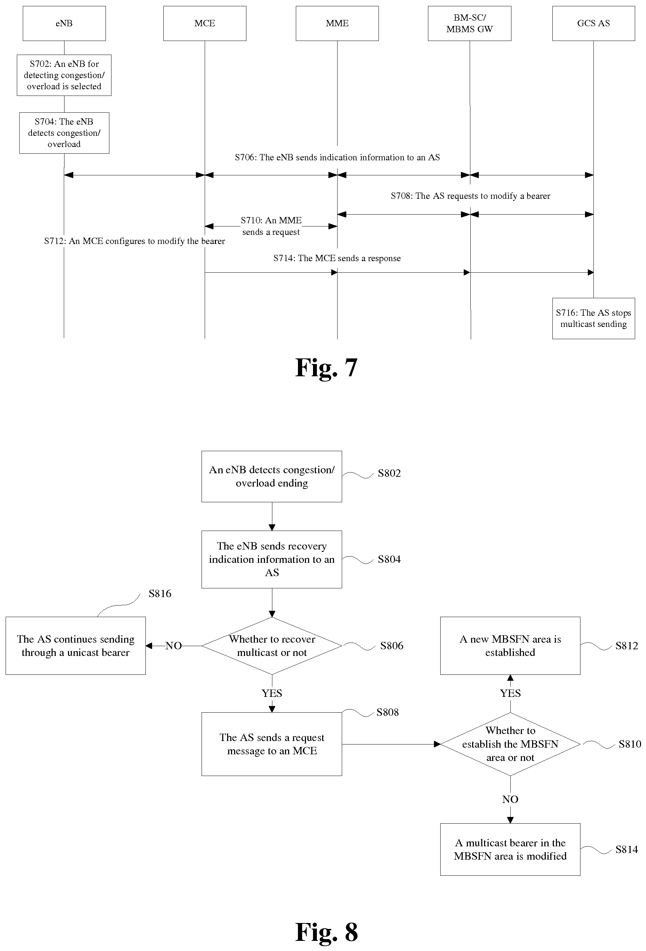

Fig. 7 is a flowchart of a method for implementing modification of a multicast bearer in a scenario where an eNB detects starting of congestion or overload of the multicast bearer according to an example embodiment of the disclosure. As shown in Fig. 7, a flow may include the following processing steps.

Step S702: an eNB for detecting congestion or overload is selected.

In the example embodiment, an entity which executes selection may be one of: an MCE for selection, a GCS AS for selection and O&M for selection. The congestion or overload refers to that a user plane data service of an MBMS is congested or overloaded, and a judgment criterion for the congestion or overload is required to be formulated and notified to the target eNB in advance. Alternatively, the judgement criterion may be contained in indication information.

Under a normal condition, when user plane data of an MBMS in an MBSFN area is congested or overloaded, considering that all eNBs participating in MBSFN transmission in the MBSFN area have the same resource configuration, all the eNBs are congested or overloaded. And at this moment, when all the eNBs report congestion or overload indications on M2 interfaces, reported contents are completely the same, so that it is unnecessary to report the congestion or overload indications by all the eNBs, and it may be determined that the MBSFN area or MBMS area is congested by reporting congestion or overload by one eNB in the MBSFN area. That is, all congestion or overload information may be presumed according to a part of congestion or overload information, so that not only may detection efficiency be improved, but also a network signalling load may be reduced.

One or more eNBs may be selected, one eNB may usually be selected in an MBSFN area when the eNB is selected by the MCE or the O&M, and notification may be implemented through the O&M or a signalling manner.

When the eNB is selected by the GCS AS, it is considered that the selected eNB is not congested or overloaded but a target MBMS area may still be congested or overloaded. For example, there are multiple MBSFN areas in the target MBMS area, the MBSFN area where the eNB is located is not congested or overloaded, another MBSFN area is congested or overloaded, but the GCS AS does not know about a configuration of the MBSFN area. In order to avoid occurrence of the condition as much as possible, the GCS AS may select multiple eNBs arranged to detect congestion or overload.

The eNB is an eNB in a specific MBMS area. There are multiple eNBs in an MBMS area, and at this moment, any eNB may be selected to monitor congestion or overload.

It is important to point out that the target MBMS area is also specified at the same time of selecting the eNB. The target MBMS area is an area with a requirement on congestion or overload detection. The MBMS area adopts an SAI. When there is no MBMS area specified, considering that a single eNB may belong to multiple MBMS areas, the selected eNB monitors congestion or overload states of all the MBMS areas. The eNB may also be selected by indication of a cell ID, that is, the eNB is determined through the cell ID.

In the example embodiment provided by the disclosure, the following descriptions represent the same concept: an MBMS bearer, an MBSFN bearer, a multicast bearer and a PTM bearer.

The MBMS bearer may include: a core network bearer (i.e. an Evolved Packet Core network (EPC) bearer and an air interface bearer, and a Radio Access Network (RAN) (at least one of the eNB and an MCE) configures an MBMS air interface resource, and sends MBMS configuration information and trunking data at an air interface.

It is important to point out that a congested user plane service may be an ordinary MBMS or a GCS, and the ordinary MBMS and the GCS may be differentiated through different QCI parameters.

Step S704: the eNB detects congestion or overload of a multicast bearer.

The congestion refers to that a user plane data load reaches a preset threshold value, and the overload refers to that it is impossible for a network node to continue processing an additional user plane data load. The user plane data mentioned in the disclosure refers to MBMS data on a PMCH.

The eNB may detect that the user plane data is congested or overloaded according to a preset rule, that is, a congestion or overload condition is predefined, and the eNB determines occurrence of the congestion or overload when judging that the condition is met.

Alternatively, the congestion or overload condition is the set judgment rule, and may be contained in a request message sent to the eNB, besides being preset.

Step S706: the eNB sends congestion or overload indication information to an AS.

The eNB may send the congestion or overload indication information to the GCS AS through eNB→MCE→MME→MBMS GW→BM-SC→AS. That is, the eNB sends the indication information to the MCE through an M2 interface at first, and the indication information may be implemented by adopting existing M2 interface signalling and adding a new indication field, or, directly adopts new M2 interface signalling.

Similarly, when being sent on an M3 interface, an Sm interface, an SGmb interface and an MB2-c interface, the congestion or overload indication information may be implemented by adopting existing interface signalling and adding a new indication field, or, directly adopting new dedicated interface signalling.

The congestion or overload indication information may include, but not limited to, at least one of:
(1) a congestion or overload ID;
(2) at least one cell ID, for example: an ECI and an ECGI;
(3) at least one SAI;
(4) at least one MBSFN area ID;
(5) at least one MBMS ID, for example: a TMGI; and
(6) a congestion or overload starting ID,
in which the congestion or overload ID is used for indicating whether a load of the user plane data in a current network is congested or overloaded, the at least one cell ID is used for indicating cells influenced by the congestion or the overload, the at least one SAI is used for indicating MBMS areas influenced by the congestion or the overload, the at least one MBSFN area ID is used for indicating congested or overloaded MBSFN areas, and the at least one MBMS ID is used for indicating trunking services influenced by the congestion or the overload.

It is important to point out that the MBSFN area ID is sent on the M2 interface.

A content of congestion or overload starting or ending may include, but not limited to, at least one of:
(1) starting (indicated by 1 or true); and
(2) ending (indicated by 0 or false).

For congestion or overload starting or ending, in other words, congestion or overload starting is equivalent to that congestion or overload currently occurs, and congestion or overload ending is equivalent to that no congestion or overload currently occurs or the started congestion or overload has ended.

Node congestion refers to that an MBMS user plane data load in the network reaches a preset threshold value; and node overload refers to that it is impossible for the network node to process an additional MBMS user plane data load.

The content of the reported MBMS congestion or overload information may include, but not limited to: if congestion is indicated by C and overload is indicated by O, for example:
{ECI1 or MBSFN area ID1 or SAI1: TMGI1, TMGI2, TMGI3; C, true},
{ECI2 or MBSFN area ID1 or SAI1: TMGI5, TMGI6; O, false} and
{ECI3 or MBSFN area ID2 or SAI1: TMGI10; C, false}.

Notes: in the examples, TMGI1, TMGI2 and TMGI3 in ECI1 are congested; overload of TIMGI5 and TMGI6 in ECI2 ends; and congestion of TMGI10 in ECI3 ends.

The congestion or overload indication information may be modified in a sending process, the ECI is usually modified into an MBMS SAI, and when the MCE modifies the ECI in the received indication information into the SAI, the GCS AS may determine the congested or overloaded MBMS area according to the received indication information.

Under the condition that the overload indication O is 1 (True), the congestion indication C may not be sent; or although the congestion indication C is sent, UE may ignore the indication.

Considering that it may only be a specific trunking service (for example: PTT) congested or overloaded, it is determined that the congested or overloaded service is the specific trunking service according to QoS information of the service, for example: the QCI or the ARP. Since the eNB does not know about the QoS information of the service, there are the following two congestion or overload reporting methods for the eNB.

A first method: the eNB reports all congested or overloaded service identifiers TMGIs to the MCE, and the MCE selects and reports a TMGI of the congested or overloaded specific service to the GCS AS according to the TMGI of the specific service (the MCE according to a corresponding relationship between a QCI or ARP and a TMGI).

A second method: the AS requests an SAI and TMGI of which states are required to be reported, and sends the request message to the eNB through a path AS→BM-SC→MBMS GW→MME→MCE→eNB, and the eNB may report the state of the TMGI in the specific SAI to the AS through eNB→MCE→MME→MBMS GW→BM-SC→AS. Alternatively, if the request message of the AS only includes SAI information, the eNB only reports all TMGI states in the SAI.

A sending triggering manner may be one of: event triggering, AS request triggering, event triggering and AS request triggering, and periodic reporting, in which event triggering reporting refers to that the network node reports state information of the node to the AS when the congestion or overload starting or ending event occurs to the network node; AS request triggering refers to that the AS sends the request message to the network node and the network node receiving the request message reports the state information of the node to the AS; event triggering and AS request triggering refers to that the AS sends the request message to the network node and the network node reports state information of the node to the AS when detecting a congestion or overload event; and periodic reporting refers to that a reporting period is configured and the eNB reports the state of the node to the AS in each period, and the reporting period may be specified in advance or specified when the AS sends the request message.

The state that the congestion or overload starting or ending event occurs to the network node refers to: switching from a starting state to an ending state, or switching from the ending state to the starting state. That is, in case of switching from no congestion or overload (equivalent to that last congestion or overload has ended) to starting (equivalent to that congestion or overload has currently occurred), the eNB is required to report the state; in case of switching from occurrence of congestion or overload (equivalent to that the congestion or overload has currently started) to no congestion or overload (equivalent to that the congestion or overload has currently ended), the eNB is required to report the state; and moreover, under the condition that the eNB detects a mutual change of the congestion state and the overload state, eNB is also required to report the state.

Briefly, C=congestion indication, and is identified by adopting {0,1}; and O=overload indication, and is identified by adopting {0,1}. Once at least one of an identifier C and identifier O change, the eNB is required to report the state.

In a word, when the congestion or overload starting or ending state does not change, the eNB is not required to report, and then the AS may accurately master the congestion or overload state of the MBMS.

Step S708: the AS sends a request message to an MME through a BM-SC.

Before the AS sends the request message, the AS determines at least one of the influenced target UE and trunking service TMGI according to the congestion or overload indication information, and then the AS determines an action to be adopted according to the congestion or overload indication information and a local strategy, and in case of congestion, establishes a unicast bearer for the target UE, and sends the trunking service through the unicast bearer; and in case of overload, the AS puts the trunking service in a queue and sends the trunking service after the overload ends, or, the AS seizes a resource of an existing trunking service by virtue of a high-priority trunking service.

The AS sends the request message to an MME through a path BM-SC→MBMS GW→MME, the request message is used for stopping a multicast bearer, and information contained in the request message may include at least one of: a cell ID and MBMS ID, in which at least one of the cell ID and the MBMS ID is the cell ID ECI and service ID TMGI in the congestion or overload indication information received by the AS.

The request message may be implemented by an existing flow or a new flow, in which the existing flow is that: a cell ID field is added into an MBMS session stop request or MBMS session update in the existing flow. The request message is sent to the MME through the path MME through a path BM-SC→MBMS GW→MME, and the request message is used for stopping the MBMS bearer.

When the MBMS GW may not determine the specific MME, the MBMS GW may send the request message to all the MMEs in the area. Considering that the request message contains an ID of the target cell, each MME may judge whether or not the target cell belongs to a range of the MME, Step S10 is continued to be executed when the target cell belongs to the range of the MME, otherwise, the MME discards the received request message and sends response messages to the MBMS GW.

The MME send the response messages to the AS, which indicates that the MME has succeeded or failed to receive the request message. When the response messages indicate failures, the AS or BM-SC or MBMS GW may resend the request message.

Step S710: the MME sends the request message to a target MCE.

The MME may determine the target MCE according to the cell ID and the reported information of the MCE. For example: an M3 setup request or M3 CONFIGURATION UPDATE message sent to the MME by the MCE include an ECI or ECGI list, the ECI or ECGI list includes cell IDs supported by the MCE, and the MCE may acquire own supported cell IDs from the message sent by the eNB on the M2 interface, for example: the M2 setup request or the M2 eNB CONFIGURATION UPDATE message.

The MCE sends a response message to the MME, which indicates that the MCE has succeeded or failed to receive the request message. When the response message indicates a failure, the MME may resend the request message to the MCE.

Step S712: the MCE configures to stop the multicast bearer in an MBSFN area.

The MCE may judge the MBSFN area of the multicast bearer to be stopped through the received request message and a local database, for example: the eNB sends the congested or overloaded MBSFN area ID on the M2 interface.

It is supposed that the request message received by the MCE includes {ECI2; TMGI2, TMGI3}. ECI2 belongs to two MBSFN areas and the MCE has known about that an MBSFN area 1 is congested, so that the MCE determines to stop multicast sending of the TMGI2 and TMGI3 of the MBSFN area 1. The MCE sends MBMS scheduling information to the eNB in the MBSFN area 1, and TMGI2 and TMGI3 are deleted from the message. The eNB receiving the MBMS scheduling information sends updated MCCH information in the MBSFN area 1, and deletes TMGI2 and TMGI3 from the updated MCCH information, and influenced UE in the MBSFN area 1 receives the updated MCCH information and determines that a corresponding MBMS has been deleted, that is, sending of TMGI2 or TMGI3 of the corresponding trunking service on a multicast bearer is stopped.

Step S714: the MCE sends a response message to the AS.

The MCE may send the response message used for indicating that execution of the request message of the AS has succeeded or failed to the GCS AS through MCE→MME→BMBS GW→BM-SC→AS. When the response message indicates a failure, the AS may resend a request message to the MCE.

Step S716: the AS stops sending a trunking service through the multicast bearer.

The trunking service is a trunking service influenced by the congestion or overload.

### Example embodiment 2

Fig. 8 is a flowchart of a method for implementing modification of a multicast bearer in a scenario where an eNB detects ending of congestion or overload of the multicast bearer according to an example embodiment of the disclosure. As shown in Fig. 8, a flow may include the following processing steps.

Step S802: an eNB detects congestion or overload ending.

Congestion or overload ending refers to recovery of a network, for example: a user plane data load does not meet a preset congestion or overload condition.

Step S804: the eNB sends recovery indication information to an AS.

The eNB may send congestion or overload indication information to the GCS AS through eNB→MCE→MME→MBMS GW→BM-SC→AS.

The congestion or overload indication information may include, but not limited to, at least one of:
(1) a congestion or overload ID;
(2) at least one cell ID, for example: ECI and ECGI;
(3) at least one SAI;
(4) at least one MBSFN area ID;
(5) at least one MBMS ID, for example: TMGI, MBMS session ID (for example: session ID); and
(6) a congestion or overload starting ID.

A sending triggering manner may be one of: event triggering, AS request triggering, event triggering and AS request triggering, and periodic reporting, in which event triggering reporting refers to that the network node reports the state information of the node to the AS when the congestion or overload starting or ending event occurs to the network node; AS request triggering refers to that the AS sends the request message to the network node and the network node receiving the request message reports the state information of the node to the AS; event triggering and AS request triggering refers to that the AS sends the request message to the network node and the network node reports the state information of the node to the AS when detecting a congestion or overload event; and periodic reporting refers to that a reporting period is configured and the eNB reports the state information of the node to the AS in each period, and the reporting period may be specified in advance or specified when the AS sends the request message.

Step S806: the AS determines whether to recover a multicast bearer or not, Step S808 is executed when the AS determines to recover the multicast bearer, otherwise Step S816 is executed.

The AS determines influenced target UE according to the recovery indication information, and selects a proper manner to send a trunking service to the target UE. For example: the trunking service is continued to be sent through a unicast bearer or a reestablished MBMS bearer. Selection of a specific bearer manner is determined by the AS.

Step S808: the AS sends a request message to an MCE through a BM-SC.

The request message is used for establishing an MBMS bearer for the trunking service, in which the request message may include at least one of: a cell ID, a cell SAI and a TMGI.

Step S810: the MCE judges whether to establish a new MBSFN area or not, Step S816 is executed when the MCE determines to establish the new MBSFN area, otherwise Step S814 is executed.

The MCE may judge whether it is necessary to establish the new MBSFN area or not according to at least one of the received request message, OAM information and an operating company strategy. For example: when an existing MBSFN area does not include a requested cell, a new MBSFN area is established, otherwise an original MBSFN area is modified.

Step S812: the MCE establishes the new MBSFN area, and the AS sends the trunking service through an MBMS bearer.

The AS sends the trunking service to UE in the new MBSFN area through the MBMS bearer. The new MBSFN area may include the requested cell and the TMGI in the request message.

Step S814: the MCE modifies the MBSFN area, and the AS sends the trunking service in the MBSFN area.

Modification refers to that the existing MBSFN area includes the requested cell and the requested TMGI is configured in the existing MBSFN area, and the AS sends the trunking service to the UE in the existing MBSFN area.

Step S816: the AS continues sending the trunking service through a unicast bearer.

The AS does not establish the MBMS bearer, and continues sending the trunking service through the unicast bearer.

### Example embodiment 3

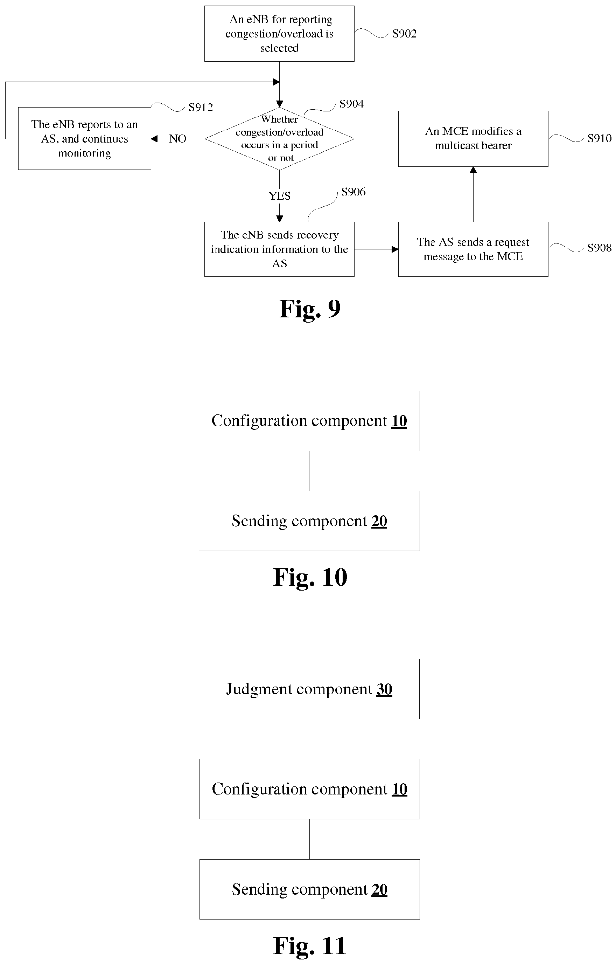

Fig. 9 is a flowchart of a method for implementing modification of a multicast bearer in a scenario where an eNB periodically reports congestion or overload according to an example embodiment of the disclosure. As shown in Fig. 9, a flow may include the following processing steps.

Step S902: an eNB for reporting congestion or overload is selected.

Step S904: the eNB judges whether the congestion or overload occurs in a preset period or not, Step S906 is executed when the congestion or overload occurs in the preset period, otherwise Step S912 is executed.

The preset period is configured for the eNB to report indication information to an AS, the preset period may be set through OAM or the AS, and even though the eNB does not detect the congestion or overload within the preset period, the eNB is also required to report the indication information to the AS.

The eNB detects whether an MBMS air interface user plane bearer, i.e. a PMCH, is congested or overloaded or not.

Step S906: the eNB reports congestion or overload information to an AS.

When detecting the congestion or overload, the eNB sends the congestion or overload indication information to the GCS AS through a path eNB→MCE→MME→MBMS GW→BM-SC→AS. Indication information sent by the interface may be implemented by adopting existing signalling and adding a new field, or, directly adopting new interface signalling. The indication information may include at least one of: an ECI, an SAI, an MBSFN area ID, a TMGI and a congestion or overload starting ID.

Step S908: the AS requests an MCE to modify an influenced multicast bearer.

The AS receiving the indication information may send a request message: modifying the influenced multicast bearer, to the MCE through a path AS→BM-SC→MBMS GW→MME→MCE.

Step S910: the MCE modifies the multicast bearer in an MBSFN area.

The MCE modifies the multicast bearer through MBMS scheduling information, for example: a TMGI in the influenced MBSFN area is deleted. The eNB sends an updated MCCH message after receiving the MBMS scheduling information, and UE receiving the updated MCCH message determines that multicast sending of a corresponding MBMS has been stopped.

Step S912: the eNB reports indication information to the AS, and continues monitoring.

When the eNB does not detect the congestion or overload or the congestion or overload has ended, the eNB sends the indication information to the GCS AS through a path eNB→MCE→MME→MBMS GW→BM-SC→AS. The indication information sent by the interface may be implemented by adopting existing signalling and adding a new field, or, directly adopting new interface signalling. The indication information may include at least one of: an ECI, an SAI, an MBSFN area ID, a TMGI and a congestion or overload starting ID.

The eNB continues monitoring congestion or overload, and Step S904 is executed.

Fig. 10 is a structure block diagram of a device for determining indication information according to an embodiment of the disclosure. The device may be applied to an eNB. As shown in Fig. 10, the indication information determination device may include: a configuration component 10, arranged to determine that user plane data borne on an MBMS is congested or overloaded, and configure first indication information; and a sending component 20, arranged to send the first indication information to a GCS AS, in which the first indication information is used for providing a reference basis in a process that the GCS AS requests an MCE or an eNB to stop a trunking service which is borne on the MBMS and influenced by congestion or overload of the user plane data.

In an example embodiment, the configuration component 10 is arranged to, when detecting that the user plane data is congested or overloaded, determine that an MBSFN area or MBMS area where at least one eNB is located is congested or overloaded.

In an example embodiment, the configuration component 10 is arranged to detect that the user plane data is congested or overloaded according to a determination condition, in which the determination condition is preconfigured or contained in a request message received from the GCS AS.

In an example embodiment, a content contained in the first indication information includes at least one of:
(1) a congestion or overload ID;
(2) at least one cell ID, in which the at least one cell ID include at least one of: ECI and ECGI;
(3) at least one SAI;
(4) at least one MBSFN area ID;
(5) at least one MBMS ID; and
(6) a congestion or overload starting ID,
in which the congestion or overload ID is used for indicating whether a load of the user plane data in a current network is congested or overloaded, the at least one cell ID is used for indicating cells influenced by the congestion or the overload, the at least one SAI is used for indicating MBMS areas influenced by the congestion or the overload, the at least one MBSFN area ID is used for indicating congested or overloaded MBSFN areas, and the at least one MBMS ID is used for indicating trunking services influenced by the congestion or the overload.

In an example embodiment, the sending component 20 is arranged to send the first indication information to the GCS AS in one of the following manners:
a first manner: at least one congested or overloaded MBMS ID is sent to the MCE to cause the MCE to select at least one MBMS ID to be reported from the at least one congested or overloaded MBMS ID according to a corresponding relationship between a first parameter and a second parameter and report the at least one selected MBMS ID to the GCS AS, in which the first parameter is a QCI or an ARP, and the second parameter is a TMGI; and
a second manner: TMGI state information in an SAI specified in a request message is reported according to the request message received from the GCS AS.

In an example embodiment, as shown in Fig. 11, the device further includes: a judgment component 30, and the judgment component 30 is arranged to judge a triggering condition for whether or not to send the first indication information to the GCS AS, including one of the followings:
a first condition: the first indication information is sent to the GCS AS under the condition that a congestion or overload starting event occurs or a congestion or overload ending event occurs;
a second condition: the first indication information is sent to the GCS AS after the request message is received from the GCS AS;
a third condition: the first indication information is sent to the GCS AS after the request message is received from the GCS AS and the congestion or overload starting event occurs or after the request message is received from the GCS AS and the congestion or overload ending event occurs;
a fourth condition: the first indication information is sent to the GCS AS according to a preset period; and
a fifth condition: the first indication information is sent to the GCS AS after every restart.

In an example embodiment, the configuration component 10 is further arranged to determine that the congestion or overload of the user plane data has been recovered, and configure second indication information; and the sending component 20 is further arranged to send the second indication information to the GCS AS, in which the second indication information is used for providing a reference basis for the GCS AS to select to continue sending the stopped trunking service in a manner of a unicast bearer or in a manner of the recovered MBMS bearer.

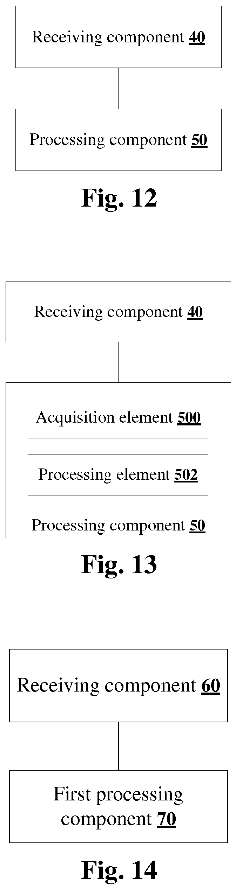

Fig. 12 is a structural block diagram of a device for processing a request message according to an embodiment of the disclosure. The device may be applied to an MCE. As shown in Fig. 12, the request message processing device may include: a receiving component 40, arranged to receive a request message from a GCS AS, in which the request message is sent after the GCS AS receives indication information used for indicating that user plane data borne on an MBMS bearer is congested or overloaded from an eNB, and the request message is arranged to request a trunking service which is borne on the MBMS and influenced by congestion or overload of the user plane data to be stopped; and a processing component 50, arranged to configure to stop sending the influenced trunking service borne on the MBMS according to the request message.

In an example embodiment, the receiving component 40 is arranged to receive the request message from the GCS AS via a BM-SC.

In an example embodiment, as shown in Fig. 13, the processing component 50 may include: an acquisition element 500, arranged to acquire an MBSFN area and MBMS of a multicast bearer to be stopped according to the request message; and a processing element 502, arranged to configure the MBSFN area and MBMS of the multicast bearer to be stopped.

In an example embodiment, information contained in the request message may include at least one of: a cell ID, an MBMS ID and an SAI.

Fig. 14 is a structural block diagram of a device for processing indication information according to an embodiment of the disclosure. The device may be applied to a GCS AS. As shown in Fig. 14, the indication information processing device may include: a receiving component 60, arranged to receive indication information from an eNB, in which the indication information is used for indicating that user plane data of an MBMS bearer is congested or overloaded; and a processing component 70, arranged to send a request message to an MCE according to the indication information, in which the request message is used for requesting a trunking service which is borne on the MBMS and influenced by congestion or overload of the user plane data to be stopped.

In an example embodiment, the first processing component 70 is arranged to send the request message to the MCE via a BM-SC.

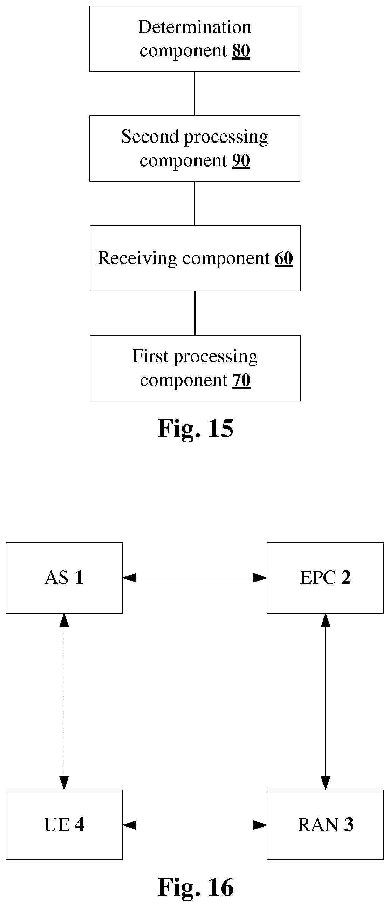

In an example embodiment, as shown in Fig. 15, the device may further include: a determination component 80, arranged to determine at least one of a target UE and a trunking service ID influenced by the congestion or overload of the user plane data according to the indication information; and a second processing component 90, arranged to, under the condition that the user plane data is congested, establish a unicast bearer for the target UE and send the trunking service corresponding to the trunking service ID through the unicast bearer, or, under the condition that the user plane data is overloaded, configure the trunking service corresponding to the trunking service ID to be in a queue waiting state and send the trunking service corresponding to the trunking service ID after the overload ends, or, under the condition that the user plane data is overloaded, seize a resource of an existing trunking service to send the trunking service corresponding to the trunking service ID.

In an example embodiment, information contained in the request message may include at least one of: a cell ID, an MBMS ID and an SAI.

As an example embodiment of the disclosure, a multicast bearer system is further provided. Fig. 16 is a schematic diagram of a multicast bearer modification system according to an example embodiment of the disclosure. As shown in Fig. 16, the multicast bearer modification system may include: an AS 1, arranged to receive congestion or overload indication information sent by an RAN and send a multicast bearer modification request message to an EPC, arranged to select a bearer manner for sending a trunking service and further arranged to send trunking service data; an EPC 2, which may include, but not limited to: an BM-SC, an MBMS-GW and an MME and is arranged to forward a control message between the AS and the RAN, arranged to receive the multicast bearer modification request message sent by the AS and further configured for message transmission in the EPC; the RAN 3, which may include, but not limited to: an MCE and an eNB and is arranged to modify a multicast bearer, in which the eNB is arranged to detect congestion or overload and send the trunking service data and configuration information to UE; and the UE 4, arranged to receive multicast bearer modification indication information sent by the RAN and receive the trunking service data sent by the AS.

The embodiments of the disclosure further record a computer storage medium, in which computer-executable instructions are stored, and the computer-executable instructions are used for executing the method for determining indication information shown in Fig. 3, or, the method for processing the request message shown in Fig. 5, or, the method for processing indication information shown in Fig. 6.

In some embodiments provided by the disclosure, it should be understood that the disclosed equipment and method may be implemented in another manner. The equipment embodiment described above is only schematic, and for example, division of the elements is only logic function division, and other division manners may be adopted during practical implementation. For example, multiple elements or components may be combined or integrated into another system, or some characteristics may be neglected or not executed. In addition, communication connection between each displayed or discussed component may be indirect coupling or communication connection, implemented through some interfaces, of the equipment or the elements, and may be electrical and mechanical or adopt other forms.

The abovementioned elements described as separate parts may or may not be physically separated, and parts displayed as elements may or may not be physical elements, and namely may be located in the same place, or may also be distributed to multiple network elements. Part or all of the elements may be selected to achieve the purpose of the solutions of the embodiments according to a practical requirement.

In addition, each function element in each embodiment of the disclosure may be integrated into a processing element, each element may also exist independently, and two or more than two element may also be integrated into a element. The abovementioned integrated element may be implemented in a hardware form, and may also be implemented in form of hardware and software function element.

Those skilled in the art should know that: all or part of the steps of the abovementioned method embodiment may be implemented by instructing related hardware through a program, the abovementioned program may be stored in a computer-readable storage medium, and the program is executed to execute the steps of the abovementioned method embodiment; and the storage medium includes: various media capable of storing program codes such as a mobile storage device, a Random Access Memory (RAM), a Read-Only Memory (ROM), a magnetic disk or an optical disk.

Or, when being implemented in form of software function component and sold or used as an independent product, the integrated element of the disclosure may also be stored in a computer-readable storage medium. Based on such an understanding, the technical solutions of the embodiments of the disclosure substantially or parts making contributions to the conventional art may be embodied in form of software product, and the computer software product is stored in a storage medium, including a plurality of instructions used for enabling a computer device (which may be a personal computer, a server, network equipment or the like) to execute all or part of the method in each embodiment of the disclosure. The above-mentioned storage medium includes: various media capable of storing program codes such as a mobile storage device, a RAM, a ROM, a magnetic disk or an optical disk.

Obviously, those skilled in the art should know that each component or each step of the disclosure may be implemented by a universal computing device, and the components or steps may be concentrated on a single computing device or distributed on a network formed by a plurality of computing devices, and may optionally be implemented by program codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the disclosure is not limited to any specific hardware and software combination.

The above is only the example embodiments of the disclosure and not intended to limit the disclosure. For those skilled in the art, the disclosure may have various modifications and variations.

### Industrial Applicability

As mentioned above, a method and device for determining and processing indication information, a method and device for processing a request message and a computer storage medium provided by the embodiments of the disclosure have the following beneficial effects: the MBMS multicast bearer of the MBSFN area in the MBMS area may further be modified, and in case of congestion or overload of the MBMS bearer, the trunking service is stopped to be sent through the MBMS bearer in the MBSFN area to alleviate the congestion or overload of the MBMS bearer and reduce influence on the UE in the area without congestion or overload.

## Claims

1. A method for reducing impact of overload or congestion in a network carrying Multimedia Broadcast Multicast Service, MBMS, user plane data, said network comprising at least a Group Communication Service Application Server, GCS AS, a Multi-cell or Multicast Coordination Entity, MCE, and an Evolved Node B, eNB, said method comprising:
determining (S302), by the eNB, that an MBMS over a Single Frequency Network, MBSFN, area where the eNB is located, is congested or overloaded;
configuring (S302), by the eNB, first information, wherein the first information comprises at least an identifier of said MBSFN area;
sending (S304, S602), by the eNB, the first information to the GCS AS;
determining, by the GCS AS, at least one trunking MBMS trunking service which is influenced by the congestion or overload according to the received first information;
requesting (S604, S502), by the GCS AS, the MCE or the eNB, to stop said at least one MBMS trunking service;
stopping (S504), by the MCE or the eNB, said at least one MBMS trunking service.

2. The method as claimed in claim 1, wherein
the determining further comprises: determining that the network is congested or overloaded according to a determination condition, wherein the determination condition is preconfigured or contained in a request message received from the GCS AS; or wherein the first information further comprises at least one of a congestion or overload identifier (ID), at least one cell ID,
wherein the at least one cell ID comprises at least one of: Evolved Universal Terrestrial Radio Access Network, E-UTRAN, Cell Identifier, ECI, and E-UTRAN Cell Global Identifier, ECGI; at least one Service Area Identifier, SAI; at least one MBMS ID; and a congestion or overload starting ID, wherein the congestion or overload ID is used for indicating whether a load of the current network carrying user plane data is congested or overloaded, the at least one cell ID is used for indicating cells influenced by the congestion or the overload, the at least one SAI is used for indicating MBMS areas influenced by the congestion or the overload, and the at least one MBMS ID is used for indicating trunking services influenced by the congestion or the overload.

3. The method as claimed in claim 2, wherein the first information is sent to the GCS AS in one of the following manners:
manner one: at least one congested or overloaded MBMS ID is sent to the MCE to cause the MCE to select at least one MBMS ID to be reported from the at least one congested or overloaded MBMS ID according to a corresponding relationship between a first parameter and a second parameter and report the at least one selected MBMS ID to the GCS AS, wherein the first parameter is a Quality of Service Class Identifier, QCI, or an Allocation and Retention Priority, ARP, and the second parameter is a Temporary Mobile Group Identity, TMGI;
manner two: reporting TMGI state information in an SAI specified in a request message according to the request message received from the GCS AS.

4. The method as claimed in claim 1, wherein after determining that there is a congestion or overload in a network carrying user plane data for the MBMS , and before sending the first information to the GCS AS, the method comprises one of the following:
judging a triggering condition of whether or not to send the first information to the GCS AS, comprising one of the following: the first information is sent to the GCS AS under the condition that a congestion or overload starting event occurs or a congestion or overload ending event occurs; the first information is sent to the GCS AS after a request message is received from the GCS AS; the first information is sent to the GCS AS after a request message is received from the GCS AS and a congestion or overload starting event occurs or after a request message is received from the GCS AS and a congestion or overload ending event occurs; the first information is sent to the GCS AS according to a preset period; and the first information is sent to the GCS AS after every restart;
after sending the first information to the GCS AS, further comprising: determining that the congestion or overload in the network carrying user plane data has been recovered, and configuring second information; and sending the second information to the GCS AS, wherein the second information is used for providing a reference basis for the GCS AS to select to sending the stopped trunking service in a manner of a unicast bearer or in a manner of the recovered MBMS bearer.

5. The method as claimed in claim 1, wherein stopping, by the MCE or the eNB, said at least one MBMS trunking service comprises:
receiving a request message from the GCS AS, wherein the request message is sent after the GCS AS receives the first information (S502); and
configuring to stop sending the influenced trunking service carried on the MBMS according to the request message (S504).

6. The method as claimed in claim 5, wherein the request message is received from the GCS AS via a Broadcast Multicast Service Centre, BM-SC;
or information contained in the request message comprises at least one of: a cell Identifier, ID, an MBMS ID and a Service Area Identifier, SAI;
or stopping sending the influenced trunking service carried on the MBMS according to the request message comprises: acquiring an MBMS over the MBSFN area and MBMS of a multicast bearer to be stopped according to the request message; and configuring the MBSFN area and MBMS of the multicast bearer to be stopped.

7. The method as claimed in claim 1, wherein requesting, by the GCS AS, to stop said at least one MBMS trunking service which is influenced by the congestion or overload according to the first information, comprises:
sending a request message to a Multi-cell or Multicast Coordination Entity, MCE, according to the first information, wherein the request message is used for requesting a trunking service which is carried on the MBMS bearer and influenced by congestion or overload in the network carrying user plane data to be stopped (S604).

8. The method as claimed in claim 7, wherein the request message is sent to the MCE via a Broadcast Multicast Service Centre, BM-SC;
or information contained in the request message comprises at least one of: a cell ID, an MBMS ID and a Service Area Identifier, SAI;
or before sending the request message to the MCE according to the first information, further comprising: determining at least one of a target User Equipment, UE, and a trunking service Identifier, ID, influenced by the congestion or overload in the network carrying user plane data according to the first information; under the condition that the network carrying user plane data is congested, establishing a unicast bearer for the target UE, and sending the trunking service corresponding to the trunking service ID through the unicast bearer; or, under the condition that the network carrying user plane data is overloaded, configuring the trunking service corresponding to the trunking service ID to be in a queue waiting state, and sending the trunking service corresponding to the trunking service ID after the overload ends; or, under the condition that the network carrying user plane data is overloaded, seizing resources of an existing trunking service to send the trunking service corresponding to the trunking service ID.

9. A system for dealing with overload or congestion in a network carrying Multimedia Broadcast Multicast Service, MBMS, user plane data, the system comprising at least a Group Communication Service Application Server, GCS AS, a Multi-cell or Multicast Coordination Entity, MCE, and an Evolved Node B, eNB, wherein the eNB comprises: a configuration component (10), arranged to determine that an MBMS over a Single Frequency Network, MBSFN, area where the eNB is located, is congested or overloaded; and which is further arranged to configure first information; wherein the first information comprises at least an identifier of said MBSFN area; and a sending component (20), arranged to send the first information to the wherein the GCS AS is arranged to determine at least one trunking MBMS trunking service which is influenced by the congestion or overload according to the received first information; and to request the MCE or the eNB, to stop said at least one MBMS trunking service; wherein the MCE is arranged to stop said at least one MBMS trunking service; and wherein the eNB is further arranged to stop said at least one MBMS trunking service.

10. The system as claimed in claim 9, wherein the configuration component (10) of the eNB is further arranged to detect that the network carrying user plane data is congested or overloaded according to a determination condition, wherein the determination condition is preconfigured or contained in a request message received from the GCS AS;
or wherein the first information further comprises at least one of a congestion or overload identifier (ID), at least one cell ID,
wherein the at least one cell ID comprises at least one of: Evolved Universal Terrestrial Radio Access Network, E-UTRAN, Cell Identifier, ECI, and E-UTRAN Cell Global Identifier, ECGI; at least one Service Area Identifier, SAI; at least one MBMS ID; and a congestion or overload starting ID, wherein the congestion or overload ID is used for indicating whether a load of the current network carrying user plane data is congested or overloaded, the at least one cell ID is used for indicating cells influenced by the congestion or the overload, the at least one SAI is used for indicating MBMS areas influenced by the congestion or the overload, , and the at least one MBMS ID is used for indicating trunking services influenced by the congestion or the overload;
or wherein the eNB further comprises: a judgment component (30), wherein the judgment component (30) is arranged to judge a triggering condition for whether or not to send the first information to the GCS AS, comprising one of the following: the first information is sent to the GCS AS under the condition that a congestion or overload starting event occurs or a congestion or overload ending event occurs; the first information is sent to the GCS AS after a request message is received from the GCS AS; the first information is sent to the GCS AS after a request message is received from the GCS AS and a congestion or overload starting event occurs or after a request message is received from the GCS AS and a congestion or overload ending event occurs; the first information is sent to the GCS AS according to a preset period; and the first information is sent to the GCS AS after every restart;
or wherein the configuration component (10) of the eNB is further arranged to determine that the congestion or overload in the network carrying user plane data has been recovered, and configure second information; and the sending component (20) is further arranged to send the indication information to the GCS AS, wherein the second information is used for providing a reference basis for the GCS AS to select to continue sending the stopped trunking service in a manner of a unicast bearer or in a manner of the recovered MBMS bearer.

11. The system as claimed in claim 10, wherein the sending component (20) is arranged to send the first information to the GCS AS in one of the following manners:
manner one: at least one congested or overloaded MBMS ID is sent to the MCE to cause the MCE to select at least one MBMS ID to be reported from the at least one congested or overloaded MBMS ID according to a corresponding relationship between a first parameter and a second parameter and report the at least one selected MBMS ID to the GCS AS, wherein the first parameter is a Quality of Service Class Identifier, QCI, or an Allocation and Retention Priority, ARP, and the second parameter is a Temporary Mobile Group Identity, TMGI;
manner two: reporting TMGI state information in an SAI specified in a request message according to the request message received from the GCS AS.

12. The system as claimed in claim 9, wherein the MCE, or the eNB comprises:
a receiving component (40), arranged to receive a request message from a Group Communication Service, GCS, Application Server, AS, wherein the request message is sent after the GCS AS receives the first information; and
a processing component (50), arranged to configure to stop sending the influenced trunking service carried on the MBMS according to the request message.

13. The system as claimed in claim 12, wherein the receiving component is arranged to receive the request message from the GCS AS via a Broadcast Multicast Service Centre, BM-SC;
or wherein information contained in the request message comprises at least one of: a cell Identifier, ID, an MBMS ID and a Service Area Identifier, SAI;
or wherein the processing component (50) comprises: an acquisition element (500), arranged to acquire an MBMS over a the MBSFN area and MBMS of a multicast bearer to be stopped according to the request message; and a processing element (502), arranged to configure the MBSFN area and MBMS of the multicast bearer to be stopped.

14. The system as claimed in claim 9, wherein the GCS AS comprises:
a receiving component (60), arranged to receive the first information from the eNB; and
a processing component (70), arranged to send a request message to the MCE, according to the first information, wherein the request message is used for requesting a trunking service which is carried on the MBMS and influenced by congestion or overload in the network user plane data to be stopped.

15. The system as claimed in claim 14, wherein the
first processing component (70) is arranged to send the request message to the MCE via a Broadcast Multicast Service Centre, BM-SC;
or wherein information contained in the request message comprises at least one of: a cell ID, an MBMS ID and a Service Area Identifier, SAI;
or wherein the GCS AS further comprises: a determination component (80), arranged to determine at least one of a target User Equipment, UE, and a trunking service Identifier, ID, influenced by the congestion or overload in the network carrying user plane data according to the first information; and
a second processing component (90), arranged to, under the condition that the network carrying user plane data is congested, establish a unicast bearer for the target UE and send the trunking service corresponding to the trunking service ID through the unicast bearer, or, under the condition that the network carrying user plane data is overloaded, configure the trunking service corresponding to the trunking service ID to be in a queue waiting state and send the trunking service corresponding to the trunking service ID after the overload ends, or, under the condition that the network carrying user plane data is overloaded, seize resources of an existing trunking service to send the trunking service corresponding to the trunking service ID.

## Patentansprüche

1. Verfahren zum Reduzieren der Auswirkung von Überlastung oder Überbelegung in einem Netz, das Multimedia Broadcast Multicast Service-Benutzerebenendaten, MBMS-Benutzerebenendaten, transportiert, wobei das Netz mindestens einen roup Communication Service Application Server, GCS-AS, eine Multi-cell Coordination Entity oder Multicast Coordination Entity, MCE, und einen Evolved Node, eNB, umfasst, wobei das Verfahren umfasst:
durch den eNB, Feststellen (S302), dass ein MBMS over a Single Frequency-Netzwerk, MBSFN, in dem sich der eNB befindet, überbelegt oder überlastet ist;
durch die ersten eNB-Informationen, Konfigurieren (S302), wobei die ersten Informationen mindestens eine Kennung des MBSFN-Bereichs umfassen;
durch den eNB, Senden (S304, S602) der ersten Informationen an den GCS-AS;
durch den GCS-AS, Feststellen mindestens eines bündelnden MBMS-Bündelungsdienstes, der durch gemäß den empfangenen ersten Informationen die Überbelegung oder Überlastung beeinflusst wird;
durch den GCS-AS, die MCE oder den eNB Anfordern (S604, S502) des Stoppen des mindestens einen MBMS-Bündelungsdienstes;
durch die MCE oder den eNB, Stoppen (S504) des mindestens einen MBMS-Bündelungsdienstes.

2. Verfahren nach Anspruch 1, wobei
das Feststellen ferner umfasst: Feststellen anhand einer Feststellungsbedingung, dass das Netz überbelegt oder überlastet ist, wobei die Feststellungsbedingung vorkonfiguriert oder in einer vom GCS-AS empfangenen Anforderungsnachricht enthalten ist;
oder wobei die ersten Informationen ferner mindestens eines von einer Überbelegungs- oder Überlastungskennung (Überbelegungs- oder Überlastungs-ID), mindestens einer Zellen-ID umfassen,
wobei die mindestens eine Zellen-ID mindestens eines umfasst von: einem Evolved Universal Terrestrial Radio Access Network Cell Identifier,E-UTRAN Cell Identifier, ECI, und E-UTRAN Cell Global Identifier, ECGI; mindestens einem Service Area Identifier, SAI; mindestens einer MBMS-ID; und eine Überbelegungs- oder Überlastungsstart-ID, wobei die Überbelegungs- oder Überlastungs-ID verwendet wird, um anzugeben, ob eine Last des aktuellen Netzes, das Benutzerebenendaten transportiert, überbelegt oder überlastet ist, wobei die mindestens eine Zellen-ID zum Angeben von Zellen verwendet wird, die durch die Überbelegung oder Überlastung beeinflusst werden, wobei der mindestens einen SAI zum Angeben von MBMS-Bereichen verwendet wird, die durch die Überbelegung oder Überlastung beeinflusst werden, und die mindestens eine MBMS-ID zum Angeben von Bündelungsdiensten verwendet wird, die durch die Überbelegung oder Überlastung beeinflusst werden.

3. Verfahren nach Anspruch 2, wobei die ersten Informationen auf eine der folgenden Arten an den GCS-AS gesendet werden:
Art eins: mindestens eine überbelegte oder überlastete MBMS-ID wird an die MCE gesendet, um die MCE zu veranlassen, gemäß einer entsprechenden Beziehung zwischen einem ersten Parameter und einem zweiten Parameter mindestens eine MBMS-ID auszuwählen, die aus der mindestens eine überbelegten oder überlasteten MBMS-ID gemeldet werden soll, und die mindestens eine ausgewählte MBMS-ID dem GCS-AS zu melden, wobei der erste Parameter ein Quality of Service Class Identifier, QCI, oder eine Allocation and Retention Priority, ARP, ist und der zweite Parameter eine Temporary Mobile Group Identity, TMGI, ist;
Art zwei: Melden von TMGI-Statusinformationen in einem SAI, der in einer Anforderungsnachricht gemäß der vom GCS-AS empfangenen Anforderungsnachricht angegeben ist.

4. Verfahren nach Anspruch 1, wobei nach dem Feststellen, dass eine Überbelegung oder Überlastung in einem Netz vorliegt, das Benutzerebenendaten für den MBMS transportiert, und vor dem Senden der ersten Informationen an den GCS-AS das Verfahren eines von Folgendem umfasst:
Beurteilen einer Auslösebedingung, ob die ersten Informationen an den GCS-AS gesendet werden sollen, die eines von Folgendem umfassen: Die ersten Informationen werden an den GCS-AS unter der Bedingung gesendet, dass ein Überbelegungs- oder Überlastungsstartereignis auftritt oder ein Überbelegungs- oder Überlastungsendeereignis eintritt; die ersten Informationen werden an den GCS-AS gesendet, nachdem eine Anforderungsnachricht vom GCS-AS empfangen wurde; die ersten Informationen werden an den GCS-AS gesendet, nachdem eine Anforderungsnachricht vom GCS-AS empfangen wurde und ein Überbelegungs- oder Überlastungssstartereignis auftritt oder nachdem eine Anforderungsnachricht vom GCS-AS empfangen wurde und ein Überbelegungs- oder Überlastungsendereignis auftritt. die ersten Informationen werden gemäß eines voreingestellten Zeitraums an den GCS-AS gesendet; und die ersten Informationen werden nach jedem Neustart an den GCS-AS gesendet;
nach dem Senden der ersten Information an den GCS-AS, ferner umfassend: Feststellen, dass die Überbelegung oder Überlastung in dem Netz behoben wurde, das Benutzerebenendaten transportiert, und Konfigurieren der zweiten Informationen; und Senden der zweiten Informationen an den GCS-AS, wobei die zweiten Informationen verwendet werden, um eine Referenzbasis für den GCS-AS bereitzustellen, um auszuwählen, ob der gestoppte Bündelungsdienst auf eine Art eines Unicast-Trägers oder auf eine Art des wiederhergestellten MBMS-Trägers gesendet werden soll.

5. Verfahren nach Anspruch 1, wobei das Stoppen des mindestens einen MBMS-Bündelungsdienstes durch die MCE oder den eNB umfasst:
Empfangen einer Anforderungsnachricht vom GCS-AS, wobei die Anforderungsnachricht gesendet wird, nachdem der GCS-AS die ersten Informationen empfangen hat (S502); und
Konfigurieren, um das Senden des beeinflussten Bündelungsdienstes zu stoppen, der auf dem MBMS gemäß der Anforderungsnachricht (S504) transportiert wird.

6. Verfahren nach Anspruch 5, wobei die Anforderungsnachricht vom GCS-AS über ein Broadcast Multicast Service Center BM-SC, empfangen wird;
oder in der Anforderungsnachricht enthaltene Informationen mindestens eines umfassen aus: einer Zellenkennung, Zellen-ID, einer MBMS-ID und einem Service Area Identifier, SAI;
oder das Stoppen des Sendens des beeinflussten Bündelungsdienstes, der auf dem MBMS gemäß der Anforderungsnachricht transportiert wird, umfasst: Erfassen eines MBMS über den MBSFN-Bereich und eines MBMS eines Multicast-Trägers, der gemäß der Anforderungsnachricht gestoppt werden soll; und Konfigurieren des MBSFN-Bereichs und des MBMS des zu stoppenden Multicast-Trägers.

7. Verfahren nach Anspruch 1, wobei das Anfordern des GCS-AS, den mindestens einen MBMS-Bündelungsdienst zu stoppen, der durch die Überbelegung oder Überlastung gemäß den ersten Informationen beeinflusst wird, umfasst:
Senden einer Anforderungsnachricht an eine Multi-cell Coordination Entity oder Multicast Coordination Entity, MCE gemäß den ersten Informationen, wobei die Anforderungsnachricht zum Anfordern eines Bündelungsdienstes verwendet wird, der auf dem MBMS-Träger transportiert wird und durch Überbelegung oder Überlastung in dem Netz beeinflusst wird, das zu stoppende Benutzerebenendaten überträgt (S604).

8. Verfahren nach Anspruch 7, wobei die Anforderungsnachricht über ein Broadcast Multicast Service Center, BM-SC an die MCE gesendet wird;
oder in der Anforderungsnachricht enthaltene Informationen mindestens eines umfassen von: einer Zellen-ID, einer MBMS-ID und einem Service Area Identifier, SAI;
oder vor dem Senden der Anforderungsnachricht an die MCE gemäß den ersten Informationen ferner umfassend: Feststellen mindestens eines Zielbenutzergeräts, Ziel-UE, und einer Bündelungsdienstkennung, Bündelungs-ID, die durch die Überbelegung oder Überlastung in dem Netz beeinflusst wird, dass Benutzerebenendaten gemäß den ersten Informationen transportiert; unter der Bedingung, dass das Netz, das Benutzerebenendaten transportiert, überbelegt ist, Einrichten eines Unicast-Trägers für das Ziel-UE und Senden des Bündelungsdienstes, der der Bündelungsdienst-ID entspricht, über den Unicast-Träger; oder unter der Bedingung, dass das Netz, das Benutzerebenendaten transportiert, überlastet ist, Konfigurieren des Bündelungsdienstes, der der Bündelungsdienst-ID entspricht, sodass er sich in einem Warteschlangenwartezustand befindet, und Senden des Bündelungsdienstes, der der Bündelungsdienst-ID entspricht, nach Beendigung der Überlastung; oder unter der Bedingung, dass das Netz überlastet ist, das Benutzerebenendaten transportiert, Ressourcen eines vorhandenen Bündelungsdienstes in Besitz zu nehmen, um den Bündelungsdienst zu senden, der der Bündelungsdienst-ID entspricht.

9. System zum Behandeln von Überbelegung oder Überlastung in einem Netz, das MBMS-Benutzerebenendaten transportiert, wobei das System mindestens einen Group Communication Service Application Server, GCS-AS, eine Multi-cell Coordination Entity oder Multicast Coordination Entity, MCE, und einen Evolved Node B, eNB, umfasst, wobei der eNB umfasst: eine Konfigurationskomponente (10), die eingerichtet ist, um zu festzustellen, dass ein MBMS over a Single Frequency-Netzwerk, MBSFN, in dem sich der eNB befindet, überbelegt oder überlastet ist; und die ferner eingerichtet ist, um erste Informationen zu konfigurieren;
wobei die ersten Informationen mindestens eine Kennung des MBSFN-Bereichs umfassen; und
eine Sendekomponente (20), die eingerichtet ist, um die ersten Informationen an den GCS-AS zu senden;
wobei der GCS-AS eingerichtet ist, um mindestens einen bündelnden MBMS-Bündelungsdienst festzustellen, der durch die Überbelegung oder Überlastung gemäß den empfangenen ersten Informationen beeinflusst wird; und die MCE oder den eNB aufzufordern, den mindestens einen MBMS-Bündelungsdienst zu stoppen;
wobei die MCE eingerichtet ist, um den mindestens einen MBMS-Bündelungsdienst zu stoppen; und
wobei der eNB ferner eingerichtet ist, um den mindestens einen MBMS-Bündelungsdienst zu stoppen.

10. System nach Anspruch 9, wobei die Konfigurationskomponente (10) des eNB ferner eingerichtet ist, um zu erkennen, dass das Netz, das Benutzerebenendaten transportiert, gemäß einer Feststellungsbedingung überbelegt oder überlastet ist, wobei die Feststellungsbedingung vorkonfiguriert ist oder in einer vom GCS-AS empfangenen Anforderungsnachricht enthalten ist;
oder wobei die ersten Informationen ferner mindestens eines von einer Überbelegungs- oder Überlastungskennung (Überbelegungs- oder Überlastungs-ID), mindestens einer Zellen-ID umfassen,
wobei die mindestens eine Zellen-ID mindestens eines umfasst von: einem Evolved Universal Terrestrial Radio Access Network Cell Identifier, E-UTRAN Cell Identifier, ECI, und E-UTRAN Cell Global Identifier, ECGI; mindestens einem Service Area Identifier, SAI; mindestens einer MBMS-ID; und eine Überbelegungs- oder Überlastungsstart-ID, wobei die Überbelegungs- oder Überlastungs-ID verwendet wird, um anzugeben, ob eine Last des aktuellen Netzes, das Benutzerebenendaten transportiert, überbelegt oder überlastet ist, wobei die mindestens eine Zellen-ID zum Angeben von Zellen verwendet wird, die durch die Überbelegung oder Überlastung beeinflusst werden, wobei der mindestens einen SAI zum Angeben von MBMS-Bereichen verwendet wird, die durch die Überbelegung oder Überlastung beeinflusst werden, und die mindestens eine MBMS-ID zum Angeben von Bündelungsdiensten verwendet wird, die durch die Überbelegung oder Überlastung beeinflusst werden;
oder wobei der eNB ferner umfasst: eine Beurteilungskomponente (30), wobei die Beurteilungskomponente (30) eingerichtet ist, um eine Auslösebedingung zu beurteilen, ob die ersten Informationen an den GCS-AS gesendet werden sollen, die eines von Folgendem umfassen: Die ersten Informationen werden an den GCS-AS unter der Bedingung gesendet, dass ein Überbelegungs- oder Überlastungsstartereignis auftritt oder ein Überbelegungs- oder Überlastungsendeereignis eintritt; die ersten Informationen werden an den GCS-AS gesendet, nachdem eine Anforderungsnachricht vom GCS-AS empfangen wurde; die ersten Informationen werden an den GCS-AS gesendet, nachdem eine Anforderungsnachricht vom GCS-AS empfangen wurde und ein Überbelegungs- oder Überlastungssstartereignis auftritt oder nachdem eine Anforderungsnachricht vom GCS-AS empfangen wurde und ein Überbelegungs- oder Überlastungsendereignis auftritt. die ersten Informationen werden gemäß eines voreingestellten Zeitraums an den GCS-AS gesendet; und die ersten Informationen werden nach jedem Neustart an den GCS-AS gesendet;
oder wobei die Konfigurationskomponente (10) des eNB ferner eingerichtet ist, um festzustellen, dass die Überbelegung oder Überlastung in dem Netz behoben wurde, das Benutzerebenendaten transportiert, und zweite Informationen zu konfigurieren; und die Sendekomponente (20) ferner eingerichtet ist, um die Angabeinformationen an den GCS-AS zu senden, wobei die zweiten Informationen verwendet werden, um eine Referenzbasis für den GCS-AS bereitzustellen, um auszuwählen, ob das Senden des gestoppten Bündelungsdienstes auf eine Art eines Unicast-Trägers oder auf eine Art des wiederhergestellten MBMS-Trägers gesendet werden soll.

11. System nach Anspruch 10, wobei die Sendekomponente (20) eingerichtet ist, um die ersten Informationen auf eine der folgenden Arten an den GCS-AS zu senden:
Art eins: mindestens eine überbelegte oder überlastete MBMS-ID wird an die MCE gesendet, um die MCE zu veranlassen, gemäß einer entsprechenden Beziehung zwischen einem ersten Parameter und einem zweiten Parameter mindestens eine MBMS-ID auszuwählen, die aus der mindestens eine überbelegten oder überlasteten MBMS-ID gemeldet werden soll, und die mindestens eine ausgewählte MBMS-ID dem GCS-AS zu melden, wobei der erste Parameter ein Quality of Service Class Identifier, QCI, oder eine Allocation and Retention Priority, ARP, ist und der zweite Parameter eine Temporary Mobile Group Identity, TMGI, ist;
Art zwei: Melden von TMGI-Statusinformationen in einem SAI, der in einer Anforderungsnachricht gemäß der vom GCS-AS empfangenen Anforderungsnachricht angegeben ist.

12. System nach Anspruch 9, wobei die MCE oder der eNB ferner umfasst:
eine Empfangskomponente (40), die eingerichtet ist, um eine Anforderungsnachricht von einem Group Communication Service Application Server, GCS-AS, zu empfangen, wobei die Anforderungsnachricht gesendet wird, nachdem der GCS-AS die ersten Informationen empfangen hat; und
eine Verarbeitungskomponente (50), die eingerichtet ist, um das Senden des beeinflussten Bündelungsdienstes zu stoppen, der auf dem MBMS gemäß der Anforderungsnachricht transportiert wird.

13. System nach Anspruch 12, wobei die Empfangskomponente eingerichtet ist, um die Anforderungsnachricht vom GCS-AS über ein Broadcast Multicast Service Center, BM-SC zu empfangen;
oder wobei in der Anforderungsnachricht enthaltene Informationen mindestens eines umfassen von: einer Zellenkennung, Zellen-ID, einer MBMS-ID und einem Service Area Identifier, SAI;
oder wobei die Verarbeitungskomponente (50) umfasst: ein Erfassungselement (500), das eingerichtet ist, um einen MBMS über einen MBSFN-Bereich und einen MBMS eines Multicast-Trägers zu erfassen, der gemäß der Anforderungsnachricht gestoppt werden soll; und ein Verarbeitungselement (502), das eingerichtet ist, um den MBSFN-Bereich und den MBMS des zu stoppenden Multicast-Trägers zu konfigurieren.

14. System nach Anspruch 9, wobei der GCS-AS ferner umfasst:
eine Empfangskomponente (60), die eingerichtet ist, um die ersten Informationen vom eNB zu empfangen; und
eine Verarbeitungskomponente (70), die eingerichtet ist, um eine Anforderungsnachricht gemäß der ersten Information an die MCE zu senden, wobei die Anforderungsnachricht zum Anfordern eines Bündelungsdienstes verwendet wird, der auf dem MBMS transportiert wird und durch Überbelegung oder Überlastung bei den Netzbenutzerebenendaten beeinflusst wird, die gestoppt werden sollen.

15. System nach Anspruch 14, wobei die erste Verarbeitungskomponente (70) eingerichtet ist, um die Anforderungsnachricht über ein Broadcast Multicast Service Center, BM-SC an die MCE zu senden;
oder wobei in der Anforderungsnachricht enthaltene Informationen mindestens eines umfassen von: einer Zellen-ID, einer MBMS-ID und einem Service Area Identifier, SAI;
oder wobei der GCS-AS ferner umfasst: eine Feststellungskomponente (80), die eingerichtet ist, um mindestens eines aus einem Zielbenutzergerät, Ziel-UE, und einer Bündelungsdienstkennung, Bündelungs-ID, festzustellen, die durch die Überbelegung oder Überlastung in dem Netz beeinflusst werden, das Benutzerebenendaten gemäß den ersten Informationen transportiert; und
eine zweite Verarbeitungskomponente (90), die eingerichtet ist, um unter der Bedingung, dass das Netz, das Benutzerebenendaten transportiert, überlastet ist, einen Unicast-Träger für das Ziel-UE einzurichten und den Bündelungsdienst, der der Bündelungsdienst-ID entspricht, über den Unicast-Träger zu senden, oder unter der Bedingung, dass das Netz überlastet ist, das Benutzerebenendaten transportiert, den Bündelungsdienst zu konfigurieren, der der Bündelungsdienst-ID entspricht, sodass er sich in einem Warteschlangenwartezustand befindet, und den Bündelungsdienst zu senden, der der Bündelungsdienst-ID entspricht, nachdem die Überlastung endet, oder unter der Bedingung, dass das Netz überlastet ist, das Benutzerebenendaten transportiert, Ressourcen eines vorhandenen Bündelungsdienstes in Besitz zu nehmen, um den Bündelungsdienst zu senden, der der Bündelungsdienst-ID entspricht.

## Revendications

1. Procédé destiné à réduire l'impact de la surcharge ou de la congestion dans un réseau transportant des données de plan d'utilisateur du service de diffusion multidiffusion multimédia, MBMS, ledit réseau comprenant au moins un serveur d'applications de service de communication de groupe, GCS AS, une entité de coordination multicellulaire ou multidiffusion, MCE, et un nœud évolué B, eNB, ledit procédé comprenant :
déterminer (S302), par l'eNB, qu'un MBMS sur une zone de réseau à fréquence unique, MBSFN, où se trouve l'eNB, est congestionné ou surchargé ;
configurer (S302), par l'eNB, de premières informations, les premières informations comprenant au moins un identifiant de ladite zone MBSFN ;
envoyer (S304, S602), par l'eNB, les premières informations au GCS AS ;
déterminer, par le GCS AS, au moins un service de jonction MBMS de jonction qui est influencé par la congestion ou la surcharge selon les premières informations reçues ;
demander (S604, S502), par le GCS AS, à la MCE ou l'eNB, d'arrêter ledit au moins un service de jonction MBMS ;
arrêter (S504), par la MCE ou l'eNB, ledit au moins un service de jonction MBMS.

2. Procédé selon la revendication 1, dans lequel
la détermination comprend en outre : la détermination que le réseau est congestionné ou surchargé selon une condition de détermination, dans lequel la condition de détermination est préconfigurée ou contenue dans un message de demande reçu du GCS AS ;
ou dans lequel les premières informations comprennent en outre au moins un identifiant de congestion ou de surcharge (ID), au moins un ID de cellule,
dans lequel l'au moins un ID de cellule comprend au moins l'un parmi : Réseau d'accès radio terrestre universel évolué, E-UTRAN, identifiant de cellule, ECI et identifiant global de cellule E-UTRAN, ECGI ; au moins un identifiant de zone de service, SAI ; au moins un ID MBMS ; et un ID de démarrage de congestion ou de surcharge, dans lequel l'ID de congestion ou de surcharge est utilisé pour indiquer si une charge du réseau actuel transportant des données de plan d'utilisateur est congestionnée ou surchargée, l'au moins un ID de cellule est utilisé pour indiquer des cellules influencées par la congestion ou la surcharge, l'au moins un SAI est utilisé pour indiquer les zones MBMS influencées par la congestion ou la surcharge et l'au moins un ID MBMS est utilisé pour indiquer les services de jonction influencés par la congestion ou la surcharge.

3. Procédé selon la revendication 2, dans lequel les premières informations sont envoyées au GCS AS selon l'une des manières suivantes :
manière un : au moins un ID MBMS congestionné ou surchargé est envoyé à la MCE pour amener la MCE à sélectionner au moins un ID MBMS à signaler à partir du au moins un ID MBMS congestionné ou surchargé selon une relation correspondante entre un premier paramètre et un deuxième paramètre et signaler au moins un ID MBMS sélectionné au GCS AS, dans lequel le premier paramètre est un identificateur de classe de qualité de service, QCI, ou une priorité d'allocation et de rétention, ARP, et le deuxième paramètre est une identité de groupe mobile temporaire, TMGI ;
manière deux : signaler les informations d'état TMGI dans un SAI spécifié dans un message de demande selon un message de demande reçu du GCS AS.

4. Procédé selon la revendication 1, dans lequel, après avoir déterminé qu'il existe une congestion ou une surcharge dans un réseau transportant des données de plan d'utilisateur pour le MBMS et avant d'envoyer les premières informations au GCS AS, le procédé comprend l'un des éléments suivants :
juger une condition de déclenchement de l'envoi ou non des premières informations au GCS AS, comprenant l'une des conditions suivantes : les premières informations sont envoyées au GCS AS à la condition qu'un événement de début de congestion ou de surcharge se produise ou une fin de congestion ou de surcharge l'événement se produise ; les premières informations sont envoyées au GCS AS après réception d'un message de demande du GCS AS ; les premières informations sont envoyées au GCS AS après qu'un message de demande est reçu du GCS AS et qu'un événement de début de congestion ou de surcharge se produit ou après qu'un message de demande est reçu du GCS AS et qu'un événement de fin de congestion ou de surcharge se produit ; les premières informations sont envoyées au GCS AS selon une période prédéfinie ; et les premières informations sont envoyées au GCS AS après chaque redémarrage ;
après l'envoi des premières informations au GCS AS, comprenant en outre : la détermination que la congestion ou la surcharge dans le réseau transportant les données du plan d'utilisateur a été récupérée et la configuration de secondes informations ; et l'envoi des secondes informations au GCS AS, les secondes informations étant utilisées pour fournir une base de référence au GCS AS pour sélectionner l'envoi du service de jonction arrêté à la manière d'un support de monodiffusion ou à la manière du support MBMS récupéré.

5. Procédé selon la revendication 1, dans lequel l'arrêt, par la MCE ou l'eNB, dudit au moins un service de jonction MBMS comprend :
la réception d'un message de demande du GCS AS, le message de demande étant envoyé après que le GCS AS a reçu les premières informations (S502) ; et
la configuration d'arrêter l'envoi du service de jonction influencé effectué sur le MBMS selon le message de demande (S504).

6. Procédé selon la revendication 5, dans lequel le message de demande est reçu du GCS AS via un centre de service de diffusion multidiffusion, BM-SC ;
ou les informations contenues dans le message de demande comprennent au moins l'un parmi : un identifiant ID de cellule, un identifiant MBMS et un identifiant de zone de service, SAI ;
ou l'arrêt de l'envoi du service de jonction influencé transporté sur le MBMS conformément au message de demande comprend : l'acquisition d'un MBMS sur la zone MBSFN et du MBMS d'un support de multidiffusion à arrêter conformément au message de demande ; et la configuration de la zone MBSFN et du MBMS du support de multidiffusion à arrêter.

7. Procédé selon la revendication 1, dans lequel la demande, par le GCS AS, d'arrêter ledit au moins un service de jonction MBMS qui est influencé par la congestion ou la surcharge selon les premières informations, comprend :
l'envoi d'un message de demande à une entité de coordination multicellulaire ou multidiffusion, MCE, selon les premières informations, dans lequel le message de demande est utilisé pour demander l'arrêt d'un service de jonction qui est transporté sur le support MBMS et influencé par la congestion ou la surcharge dans le réseau transportant les données du plan d'utilisateur (S604).

8. Procédé selon la revendication 7, dans lequel le message de demande est envoyé à la MCE via un centre de service de diffusion multidiffusion, BM-SC ;
ou les informations contenues dans le message de demande comprennent au moins l'un parmi : un ID de cellule, un ID MBMS et un identifiant de zone de service, SAI ;
ou avant d'envoyer le message de demande à la MCE selon les premières informations, comprenant en outre : la détermination d'au moins l'un d'un équipement utilisateur cible, UE, et d'un identifiant de service de jonction, ID, influencé par la congestion ou la surcharge dans le réseau transportant des données plan d'utilisateur selon les premières informations ; à condition que le réseau transportant des données de plan d'utilisateur soit congestionné, établir un support de monodiffusion pour l'UE cible et envoyer le service de jonction correspondant à l'ID de service de jonction par le biais du support de monodiffusion ; ou, à condition que le réseau transportant des données du plan d'utilisateur soit surchargé, configurer le service de jonction correspondant à l'ID de service de jonction pour qu'il soit dans un état d'attente en file d'attente et envoyer le service de jonction correspondant à l'ID de service de jonction après la fin de la surcharge ; ou, à condition que le réseau transportant des données de plan d'utilisateur soit surchargé, saisir les ressources d'un service de jonction existant pour envoyer le service de jonction correspondant à l'ID de service de jonction.

9. Système pour traiter la surcharge ou la congestion dans un réseau transportant des données du plan d'utilisateur d'un service de diffusion multidiffusion multimédia, MBMS, le système comprenant au moins un serveur d'applications de service de communication de groupe, GCS AS, une entité de coordination multicellulaire ou multidiffusion, MCE, et un nœud évolué B, eNB, dans lequel l'eNB comprend : un composant de configuration (10), agencé pour déterminer qu'un MBMS sur une zone de réseau à fréquence unique, MBSFN, où se trouve l'eNB, est congestionnée ou surchargée ; et qui est en outre agencé pour configurer les premières informations ;
dans lequel les premières informations comprennent au moins un identifiant de ladite zone MBSFN ; et
un composant d'envoi (20), agencé pour envoyer les premières informations au GCS AS ;
dans lequel le GCS AS est agencé pour déterminer au moins un service de jonction MBMS de jonction qui est influencé par la congestion ou la surcharge en fonction des premières informations reçues ; et pour demander à la MCE ou à l'eNB, d'arrêter ledit au moins un service de jonction MBMS ;
dans lequel la MCE est agencée pour arrêter ledit au moins un service de jonction MBMS ; et
dans lequel l'eNB est en outre agencé pour arrêter ledit au moins un service de jonction MBMS.

10. Système selon la revendication 9, dans lequel le composant de configuration (10) de l'eNB est en outre agencé pour détecter que le réseau transportant des données de plan d'utilisateur est congestionné ou surchargé conformément à une condition de détermination, dans lequel la condition de détermination est préconfigurée ou contenue dans un message de demande reçu du GCS AS ;
ou dans lequel les premières informations comprennent en outre au moins un identifiant de congestion ou de surcharge (ID), au moins un ID de cellule,
dans lequel l'au moins un ID de cellule comprend au moins l'un parmi : Réseau d'accès radio terrestre universel évolué, E-UTRAN, identifiant de cellule, ECI et identifiant global de cellule E-UTRAN, ECGI ; au moins un identifiant de zone de service, SAI ; au moins un ID MBMS ; et un ID de démarrage de congestion ou de surcharge, dans lequel l'ID de congestion ou de surcharge est utilisé pour indiquer si une charge du réseau actuel transportant des données de plan d'utilisateur est congestionnée ou surchargée, l'au moins un ID de cellule est utilisé pour indiquer des cellules influencées par la congestion ou la surcharge, l'au moins un SAI est utilisé pour indiquer les zones MBMS influencées par la congestion ou la surcharge et l'au moins un ID MBMS est utilisé pour indiquer les services de jonction influencés par la congestion ou la surcharge ;
ou dans lequel l'eNB comprend en outre : un composant d'évaluation (30), dans lequel le composant d'évalutaion (30) est agencé pour juger une condition de déclenchement de l'envoi ou non des premières informations au GCS AS, comprenant l'une des conditions suivantes : les premières informations sont envoyées au GCS AS à la condition qu'un événement de début de congestion ou de surcharge se produise ou une fin de congestion ou de surcharge l'événement se produise ; les premières informations sont envoyées au GCS AS après réception d'un message de demande du GCS AS ; les premières informations sont envoyées au GCS AS après qu'un message de demande est reçu du GCS AS et qu'un événement de début de congestion ou de surcharge se produit ou après qu'un message de demande est reçu du GCS AS et qu'un événement de fin de congestion ou de surcharge se produit ; les premières informations sont envoyées au GCS AS selon une période prédéfinie ; et les premières informations sont envoyées au GCS AS après chaque redémarrage ;
ou dans lequel le composant de configuration (10) de l'eNB est en outre agencé pour déterminer que la congestion ou la surcharge dans le réseau transportant des données du plan d'utilisateur a été récupérée et configurer des secondes informations ; et le composant d'envoi (20) est en outre agencé pour envoyer les informations d'indication au GCS AS, dans lequel les secondes informations sont utilisées pour fournir une base de référence pour que le GCS AS choisisse de continuer à envoyer le service de jonction arrêté à la manière d'un support de monodiffusion ou à la manière du support MBMS récupéré.

11. Système selon la revendication 10, dans lequel le composant d'envoi (20) est agencé pour envoyer les premières informations au GCS AS de l'une des manières suivantes :
manière un : au moins un ID MBMS congestionné ou surchargé est envoyé à la MCE pour amener la MCE à sélectionner au moins un ID MBMS à signaler à partir du au moins un ID MBMS congestionné ou surchargé selon une relation correspondante entre un premier paramètre et un deuxième paramètre et signaler au moins un ID MBMS sélectionné au GCS AS, dans lequel le premier paramètre est un identificateur de classe de qualité de service, QCI, ou une priorité d'allocation et de rétention, ARP, et le deuxième paramètre est une identité de groupe mobile temporaire, TMGI ;
manière deux : signaler les informations d'état TMGI dans un SAI spécifié dans un message de demande selon un message de demande reçu du GCS AS.

12. Système selon la revendication 9, dans lequel la MCE ou l'eNB comprend :
un composant de réception (40), agencé pour recevoir un message de demande d'un service de communication de groupe, GCS, serveur d'application, AS, dans lequel le message de demande est envoyé après que le GCS AS a reçu les premières informations ; et
un composant de traitement (50), agencé pour configurer l'arrêt de l'envoi du service de jonction influencé transporté sur le MBMS selon le message de demande.

13. Système selon la revendication 12, dans lequel le composant de réception est agencé pour recevoir le message de demande du GCS AS via un centre de service de diffusion multidiffusion, BM-SC ;
ou dans lequel les informations contenues dans le message de demande comprennent au moins l'un parmi : un identifiant ID de cellule, un identifiant MBMS et un identifiant de zone de service, SAI ;
ou dans lequel le composant de traitement (50) comprend : un élément d'acquisition (500), agencé pour acquérir un MBMS sur une zone MBSFN et un MBMS d'un support de multidiffusion à arrêter conformément au message de demande ; et un élément de traitement (502), agencé pour configurer l'arrêt de la zone MBSFN et le MBMS du support de multidiffusion.

14. Système selon la revendication 9, dans lequel le GCS AS comprend :
un composant de réception (60), agencé pour recevoir les premières informations de l'eNB ; et
un composant de traitement (70), agencé pour envoyer un message de demande à la MCE, selon les premières informations, dans lequel le message de demande est utilisé pour demander l'arrêt d'un service de jonction qui est transporté sur le MBMS et influencé par la congestion ou la surcharge dans les données de plan d'utilisateur du réseau à être arrêté.

15. Système selon la revendication 14, dans lequel le premier composant de traitement (70) est agencé pour envoyer le message de demande à la MCE via un centre de service de diffusion multidiffusion, BM-SC ;
ou dans lequel les informations contenues dans le message de demande comprennent au moins l'un parmi : un ID de cellule, un ID MBMS et un identifiant de zone de service, SAI ;
ou dans lequel le GCS AS comprend en outre : un composant de détermination (80), agencé pour déterminer au moins un élément parmi un équipement d'utilisateur cible, UE, et un identifiant de service de jonction, ID, influencé par la congestion ou la surcharge dans le réseau transportant des données de plan d'utilisateur selon les premières informations ; et
un deuxième composant de traitement (90), agencé pour, à condition que le réseau transportant des données du plan d'utilisateur soit congestionné, établir un support de monodiffusion pour l'UE cible et envoyer le service de jonction correspondant à l'ID de service de jonction via le support de monodiffusion ou, à condition que le réseau transportant les données du plan utilisateur soit surchargé, configurer le service de jonction correspondant à l'ID de service de jonction pour qu'il soit dans un état d'attente en file d'attente et envoyer le service de jonction correspondant à l'ID de service de jonction après la fin de la surcharge ou, à condition que le réseau transportant les données du plan d'utilisateur soit surchargé, saisir les ressources d'un service de jonction existant pour envoyer le service de jonction correspondant à l'ID du service de jonction.
